(19) Europäisches Patentamt / European Patent Office / Office européen des brevets

(11) EP 3 936 230 B1

(12) **EUROPEAN PATENT SPECIFICATION**

(45) Date of publication and mention of the grant of the patent:
**24.12.2025 Bulletin 2025/52**

(21) Application number: **20766854.2**

(22) Date of filing: **05.03.2020**

(51) International Patent Classification (IPC):
***B01J 23/847*** *(2006.01)* ***B01D 53/86*** *(2006.01)*
***B01J 23/30*** *(2006.01)* ***B01J 23/34*** *(2006.01)*
***B01J 37/08*** *(2006.01)* ***B01J 23/889*** *(2006.01)*

(52) Cooperative Patent Classification (CPC):
**B01J 23/8472; B01D 53/8628; B01D 53/9418; B01J 23/22; B01J 23/28; B01J 23/30; B01J 23/34; B01J 23/8892; B01J 37/082; F01N 3/2066; F01N 3/2803;** B01D 2251/2062; B01D 2255/2065; B01D 2255/207; B01D 2255/20723; (Cont.)

(86) International application number:
**PCT/JP2020/009542**

(87) International publication number:
**WO 2020/179891 (10.09.2020 Gazette 2020/37)**

(54) **DENITRATION CATALYST AND METHOD FOR MANUFACTURING SAME**

DENITRIERUNGSKATALYSATOR UND VERFAHREN ZUR HERSTELLUNG DAVON

CATALYSEUR DE DÉNITRATION ET SON PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.03.2019 PCT/JP2019/009201**
**07.03.2019 PCT/JP2019/009202**

(43) Date of publication of application:
**12.01.2022 Bulletin 2022/02**

(73) Proprietors:
- **The Chugoku Electric Power Co., Inc.**
  **Hiroshima-shi, Hiroshima 730-8701 (JP)**
- **Tokyo Metropolitan Public University Corporation**
  **Shinjuku-ku**
  **Tokyo 163-0926 (JP)**

(72) Inventors:
- **KIYONAGA Eiji**
  **Hiroshima-shi, Hiroshima 730-8701 (JP)**
- **YOSHIDA Kazuhiro**
  **Hiroshima-shi, Hiroshima 730-8701 (JP)**
- **MORITA Keiichiro**
  **Hiroshima-shi, Hiroshima 730-8701 (JP)**
- **MURAYAMA Toru**
  **Hachioji-shi, Tokyo 192-0397 (JP)**
- **HARUTA Masatake**
  **Hachioji-shi, Tokyo 192-0397 (JP)**
- **HATA Shinichi**
  **Hachioji-shi, Tokyo 192-0397 (JP)**
- **INOMATA Yusuke**
  **Hachioji-shi, Tokyo 192-0397 (JP)**

(74) Representative: **HGF**
**HGF Europe LLP**
**Neumarkter Straße 18**
**81673 München (DE)**

(56) References cited:
**CN-A- 103 316 685**
**CN-A- 103 623 814**
**CN-B- 103 623 814**
**JP-A- 2003 053 147**
**JP-A- S5 055 577**
**US-A1- 2011 150 742**
**US-A1- 2018 272 318**

- **NAJBAR M ET AL: "Low-temperature reactivity of the surface species of vanadia-tungsta catalyst", SOLID STATE IONICS, vol. 141, 1 January 2001 (2001-01-01), pages 499 - 506, XP085645831, ISSN: 0167-2738, DOI: 10.1016/S0167-2738(01)00780-9**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- **MEIQING SHEN: "New insight into the promotion effect of Cu dopedV2O5/WO3 TiO2 for low temperature NH3-SCRperformance", RSC ADVANCES, vol. 5, 7 April 2015 (2015-04-07), pages 35155 - 35165, XP002807856, DOI: 10.1039/C5RA04940G**
- **INGLOT, A. ET AL.: "Phases in Vanadium Pentoxide- Tungsten Trioxide Catalysts", JOURNAL OF THE CHEMICAL SOCIETY FARADAY TRANSACTIONS, vol. 91, 7 January 1995 (1995-01-07), pages 145 - 148, XP000485492, DOI: 10.1039/ft9959100145**
- **NAJBAR M; GÓRA A; BIAŁAS A; WESEŁUCHA-BIRCZYŃSKA A: "Low-temperature reactivity of the surface species of vanadia-tungsta catalyst", SOLID STATE IONICS, vol. 141, no. 142, 1 May 2001 (2001-05-01), pages 499 - 506, XP085645831, ISSN: 0167-2738, DOI: 10.1016/S0167-2738(01)00780-9**
- **ZHANG QING-MAO, SONG CHONG-LIN, LV GANG, BIN FENG, PANG HUA-TING, SONG JIN-OU: "Effect of metal oxide partial substitution of V205 in V205- WO 3/Ti02 on selective catalytic reduction of NO with NH3", JOURNAL OF INDUSTRIAL AND ENGINEERING CHEMISTRY, vol. 24, 25 April 2014 (2014-04-25), pages 79 - 86, XP055851181, ISSN: 1226-086X, DOI: 10.1016/j.jiec.2014.09.012**


(52) Cooperative Patent Classification (CPC): (Cont.)
B01D 2255/2073; B01D 2255/20738;
B01D 2255/20753; B01D 2255/20761;
B01D 2255/20769; B01D 2255/20776;
B01D 2255/20792; B01D 2255/2094;
B01D 2255/9207; B01D 2257/404;
B01D 2258/0283; F01N 2370/02

## Description

TECHNICAL FIELD

The present invention relates to a denitration catalyst and a manufacturing method thereof.
In more detail, the present invention relates to a denitration catalyst used upon purifying exhaust gas produced by fuel combusting, and a manufacturing method thereof.

BACKGROUND ART

As one of the pollutants emitted into air by the combustion of fuel, nitrogen oxides (NO, $NO_2$, $NO_3$, $N_2O$, $N_2O_3$, $N_2O_4$, $N_2O_5$) can be exemplified.
The nitrogen oxides induce acid rain, ozone layer depletion, photochemical smog, etc., and have a serious influence on the environment and human bodies; therefore, treatment thereof is an important problem.
As technology for removing the above-mentioned nitrogen oxides, the selective catalytic reduction reaction ($NH_3$-SCR) with ammonia ($NH_3$) as the reductant has been known.
As disclosed in Patent Document 1, a catalyst using titanium oxide as the carrier and supporting vanadium oxide is being widely used as the catalyst used in the selective catalytic reduction reaction.
Titanium oxide has low activity for sulfur oxides, and has high stability; therefore, it is best established as the carrier.
On the other hand, although vanadium oxide plays a main role in $NH_3$-SCR, since it oxidizes $SO_2$ to $SO_3$, it has not been able to support on the order of 1 wt% or more of vanadium oxide.
In addition, with conventional $NH_3$-SCR, since the catalyst made by supporting vanadium oxide on a titanium oxide carrier almost does not react at low temperature, it must be used at high temperatures such as 350 to 400°C.
However, in order to raise the degrees of freedom of design in devices and facilities realizing $NH_3$-SCR and make more efficient, the development of a catalyst exhibiting high nitrogen oxide reduction rate activity at low temperatures has been demanded.
Subsequently, the present inventors have found a denitration catalyst in which vanadium pentoxide is present in at least 43 wt%, having a BET specific surface area of at least 30 $m^2$/g, and which can be used in denitration at 200°C or lower (Patent Document 2).
Patent Document 1: Japanese Unexamined Patent Application, Publication No. 2004-275852
Patent Document 2: Japanese Patent No. 6093101

Najbar M. et. al, "low-temperature reactivity of the surface species of vanadia-tungsta catalyst", Solid State Ionics, vol. 141, 2001, 499-506 discloses an unsupported $WO_3$-$V_2O_5$ (W:V = 7:186) catalyst. This interaction between the catalyst and nitrogen oxide (NO) at room temperature was investigated.
CN 103623814B discloses a kind of manganese vanadium oxides composite catalyst for ammine selectivity catalytic reduction nitrous oxides.
Shen M. et. al, "New insight into the promotion effect of Cu doped V2O5/WO3-TiO2 for low temperature NH3-SCR performance", RSC Advances, vol. 5, 2015, 35155-35165 discloses that the introduction of copper increases the ability of vanadium-based catalysts (specifically V/WTi catalysts) to perform selective catalytic reduction (SCR).
US 2018/0272318 A1 discloses a catalyst that exhibits a high denitration efficiency at a relatively low temperature and does not cause oxidation of SO, in a selective catalytic reduction reaction that uses ammonia as a reducing agent. A denitration catalyst contains 3.3 wt % or more of vanadium oxide in terms of vanadium pentoxide and has a BET specific surface area of 10 $m^2$/g or more.

DISCLOSURE OF THE INVENTION

Problems to be Solved by the Invention

The present inventors, as a result of thorough research trying to achieve a further improvement of the above Patent Document 2, found a denitration catalyst exhibiting a more superior reduction rate activity of nitrogen oxides.
The present invention has an object of providing a catalyst having better denitration efficiency at low temperature compared to the conventional technology, upon the selective catalytic reduction reaction with ammonia as the reductant.

Means for Solving the Problems

The present invention relates to a denitration catalyst according to claim 1, including: vanadium oxide as a main component, a second metal, wherein the second metal is tungsten, a third metal, wherein the third metal is copper, and carbon, wherein the content by vanadium pentoxide conversion of the vanadium oxide is at least 50 wt%, content by oxide conversion of the tungsten is at least 1 wt% and no more than 40 wt%, and the denitration catalyst further comprises an oxide of a composite metal of vanadium and tungsten.
In addition, the denitration catalyst is preferably used in denitration at 300°C or lower.
In addition, it is preferable for the carbon content to be at least 0.05 wt%.
In addition, a method for manufacturing the denitration catalyst according to claim 4.
In addition, in the method for manufacturing the denitration catalyst according to the present invention, it is preferable for ethylene glycol to be further included in the mixture.
The step of firing is preferably a step of firing at a temperature of 270°C or lower.

Effects of the Invention

A denitration catalyst according to the present invention has better denitration efficiency at low temperature compared to the conventional technology, upon the selective catalytic reduction reaction with ammonia as the reductant.

BRIEF DESCRIPTION OF THE DRAWINGS

Figures 1 - 23 describe catalysts falling outside the scope of claim 1.

FIG. 1 is a graph showing NO conversion rates of vanadium catalysts containing a second metal, and a vanadium catalyst not containing a second metal, according to each of the Examples;
FIG. 2 is a graph showing NO conversion rates of vanadium catalysts containing cobalt and a vanadium catalyst not containing cobalt, according to each of the Examples;
FIG. 3 is a graph showing powder XRD patterns of vanadium catalysts containing cobalt according to each of the Examples and Comparative Examples;
FIG. 4 is a graph showing Raman spectra of vanadium catalysts containing cobalt according to each of the Examples;
FIG. 5A is a graph showing XPS spectra in the V2p region of vanadium catalysts containing cobalt according to each of the Examples and Comparative Examples;
FIG. 5B is a graph showing XPS spectra in the Co2p region of vanadium catalysts containing cobalt according to each of the Examples and Comparative Examples;
FIG. 6 is a graph showing NO conversion rates of vanadium catalysts containing tungsten and a vanadium catalyst not containing tungsten, according to each of the Examples;
FIG. 7 is a graph showing powder XRD patterns of vanadium catalysts containing tungsten according to each of the Examples and Comparative Examples;
FIG. 8 is a graph showing a proportion of tungsten element in vanadium catalysts containing tungsten, according to each of the Examples and Comparative Examples;
FIG. 9 is a graph showing NO conversion rates of vanadium catalysts containing tungsten and a vanadium catalyst not containing tungsten, according to each of the Examples;
FIG. 10 is a graph showing powder XRD patterns of vanadium catalysts containing tungsten according to each of the Examples and Comparative Examples;
FIG. 11 is a graph showing a proportion of tungsten element in vanadium catalysts containing tungsten, according to each of the Examples and Comparative Examples;
FIG. 12 is a graph showing NO conversion rates of vanadium catalysts containing tungsten and a vanadium catalyst not containing tungsten, according to each of the Examples;
FIG. 13 is a graph showing NO conversion rates of vanadium catalysts according to Examples of the present invention;
FIG. 14 is a graph showing the specific surface area of vanadium catalysts, according to Examples and Comparative Examples of the present invention;
FIG. 15 is a graph showing the transition in NO conversion rates of vanadium catalysts, according to Examples and Comparative Examples of the present invention;
FIG. 16 is a graph showing NOx conversion rates under a dry atmosphere and under a 10% moisture atmosphere of vanadium catalysts, according to Examples and Comparative Examples of the present invention;
FIG. 17 shows NO conversion rates for every reaction temperature of vanadium catalysts, according to Examples and Comparative Examples of the present invention;

FIG. 18 is a TEM image of a vanadium catalyst according to an Example of the present invention;
FIG. 19 is a TEM image of a vanadium catalyst according to an Example of the present invention;
FIG. 20 is a TEM image of a vanadium catalyst according to an Example of the present invention;
FIG. 21 is a TEM image of a vanadium catalyst according to a Comparative Example of the present invention;
FIG. 22 is a graph showing NO conversion rates of vanadium catalysts containing niobium and a vanadium catalyst not containing niobium, according to Examples of the present invention;
FIG. 23 is a graph showing NO conversion rates of vanadium catalysts containing carbon and cobalt according to Examples of the present invention, and a vanadium catalyst according to a Comparative Example; and
FIG. 24 is a graph showing the NO conversion rates of vanadium catalysts according to Examples of the present invention.

PREFERRED MODE FOR CARRYING OUT THE INVENTION

Hereinafter, embodiments of the present invention will be explained.

A denitration catalyst of the present invention is defined in claim 1.

Such a denitration catalyst can exhibit a high denitration effect even under a low temperature environment, compared to a denitration catalyst such as a vanadium/titanium catalyst which is conventionally used.

First, the denitration catalyst of the present invention establishes vanadium oxide as a main component.

This vanadium oxide includes vanadium oxide (II) (VO), vanadium trioxide (III) ($V_2O_3$), vanadium tetroxide (IV) ($V_2O_4$), and vanadium pentoxide (V) ($V_2O_5$), and the V element of vanadium pentoxide ($V_2O_5$) may assume the pentavalent, tetravalent, trivalent and divalent form in the denitration reaction.

It should be noted that this vanadium oxide is a main component of the denitration catalyst of the present invention, and may contain other substances within a range not inhibiting the effects of the present invention; however, it is present in at least 50 wt% by vanadium pentoxide conversion, in the denitration catalyst of the present invention.

More preferably, vanadium oxide is preferably present in at least 60 wt% by vanadium pentoxide conversion, in the denitration catalyst of the present invention.

Secondly, the denitration catalyst of the present invention contains vanadium oxide as a main component, and tungsten; however, by containing tungsten, it is possible to exhibit high denitration effect even under a low temperature environment, compared to a denitration catalyst such as a vanadium/titanium catalyst which is conventionally used.

If impurities get into the denitration catalyst of the present invention, the crystal structure will not be continuous since an amorphous portion is produced in the denitration catalyst, and a high denitration effect is exhibited by the lines and planes in the crystal lattice distorting; however, it is assumed that higher denitration effect is exhibited as the tungsten exists more abundantly as this impurity.

In the denitration catalyst of the present invention, by tungsten substituting the vanadium sites, this denitration catalyst either or both contains oxides of composite metal, or this denitration catalyst contains an oxide of tungsten.

In addition, in the selective catalytic reduction reaction at a reaction temperature of 200°C or less using a denitration catalyst having a content of tungsten oxide of 12 wt% to 38 wt%, when calculating the content by oxide conversion of tungsten, it exhibited a NO conversion rate of 83% to 96% in the case of no moisture coexistence, and exhibited a NO conversion rate of 43% to 55% in the case of moisture coexisting.

On the other hand, in the selective catalytic reduction reaction at a reaction temperature of 200°C or less using a denitration catalyst having a content of tungsten oxide of 0 wt%, when calculating the content by oxide conversion of tungsten, it only exhibited a NO conversion rate of 76% in the case of no moisture coexistence, and only exhibited a NO conversion rate of 32% in the case of moisture coexisting.

In addition, in the selective catalytic reduction reaction at a reaction temperature of 200°C or less using a denitration catalyst having a content of tungsten oxide of 62 wt% to 100 wt%, when calculating the content by oxide conversion of tungsten, it only exhibited a NO conversion rate of 3% to 69% in the case of no moisture coexistence, and only exhibited a NO conversion rate of 0% to 29% in the case of moisture coexisting.

In addition, in the aforementioned disclosure, the denitration catalyst of the present invention establishes the content by oxide conversion of the tungsten as at least 1 wt% and no more than 40 wt%; however, it is preferably set as at least 2 wt% and no more than 38 wt%.

In addition, the content by oxide conversion of the tungsten is preferably set as at least 2 wt% and no more than 10 wt%.

In addition, the content by oxide conversion of the tungsten is preferably set as at least 2 wt% and no more than 7 wt%.

In addition, the content by oxide conversion of the tungsten is preferably set as at least 3 wt% and no more than 7 wt%.

In addition, the content by oxide conversion of the tungsten is preferably set as at least 3 wt% and no more than 5 wt%.

In addition, the content by oxide conversion of the tungsten is preferably set as at least 3 wt% and no more than 4 wt%.

The second metal is W.

It is thereby possible to distort the crystal structure of vanadium oxide, and raise the Lewis acidity.

By W functioning as a solid acid, and providing an absorption site for ammonia, it becomes possible for ammonia to efficiently contact with NO and react.

In addition, in an embodiment of the present invention, in the selective catalytic reduction reaction at a reaction temperature of 200°C or less using a denitration catalyst having a content of tungsten oxide of 8.4 wt%, when calculating the content by oxide conversion of second metal, it exhibited a NO conversion rate of 100% in the case of no moisture coexistence, and exhibited a NO conversion rate of 92.2% in the case of moisture coexisting.

In addition, in an embodiment of the present invention, in the selective catalytic reduction reaction at a reaction temperature of 200°C or less using a denitration catalyst having a content of copper oxide of 3.0 wt%, when calculating the content by oxide conversion of second metal, it exhibited a NO conversion rate of 98.8% in the case of no moisture coexistence, and exhibited a NO conversion rate of 81.0% in the case of moisture coexisting.

On the other hand, for comparative purposes only, in the selective catalytic reduction reaction at a reaction temperature of 200°C or less using a denitration catalyst not containing a second metal, it only exhibited a NO conversion rate of 82.3% in the case of no moisture coexistence, and exhibited a NO conversion rate of 47.2% in the case of moisture coexisting.

Although a repeat of the above, in the embodiment of the present invention, in the selective catalytic reduction reaction at a reaction temperature of 200°C or less using a denitration catalyst having a content of tungsten oxide of 8.4 wt%, when calculating the content by oxide conversion of tungsten, it exhibited a NO conversion rate of 100% in the case of no moisture coexistence, and exhibited a NO conversion rate of 92.2% in the case of moisture coexisting.

On the other hand, for comparative purposes only, in the selective catalytic reduction reaction at a reaction temperature of 200°C or less using a denitration catalyst not containing tungsten, it only exhibited a NO conversion rate of 82.3% in the case of no moisture coexistence, and exhibited a NO conversion rate of 47.2% in the case of moisture coexisting.

In the embodiment of the present invention, in the selective catalytic reduction reaction at a reaction temperature of 200°C or less using a denitration catalyst having a content of $WO_3$ of 8.4 wt% and a content of CuO of 3.0 wt%, when calculating the content by oxide conversion of the second and third metals, it exhibited a NO conversion rate of 89.2% in the case of no moisture coexistence, and exhibited a NO conversion rate of 79.2% in the case of moisture coexisting. It should be noted that the upper limit for the content of CuO is 13 wt%.

In addition, the denitration catalyst of the present invention contains an oxide of composite metal of vanadium and the tungsten.

In the embodiment of the present invention, in the selective catalytic reduction reaction at a reaction temperature of 150°C using a denitration catalyst produced using metatungstic acid as a precursor, when using a denitration catalyst having a total weight ratio of $WO_3$ of 2.5 wt% to 11.8 wt% in the case of oxide converting the content ratio of W, it exhibited a NO conversion rate of 85% to 100%% in the case of no moisture coexistence, and exhibited a NO conversion rate of 62% to 92% in the case of moisture coexisting.

On the other hand, although a repeat of the above and for comparative purposes only, in the selective catalytic reduction reaction at a reaction temperature of 200°C or less using a denitration catalyst not containing tungsten, it only exhibited a NO conversion rate of 82.3% in the case of no moisture coexistence, and exhibited a NO conversion rate of 47.2% in the case of moisture coexisting.

From the TEM image of this denitration catalyst produced using metatungstic acid as a precursor, it was shown that the V site in the crystal lattice of vanadium pentoxide is substituted by W, i.e. V is isolated in atomic form, and this denitration catalyst contains oxides of a composite metal of V and W.

In addition, the denitration catalyst of the present invention is preferably used in denitration at 300°C or lower.

This is because the firing temperature of the denitration catalyst of the present invention is 300°C.

On the other hand, in the Examples described later, the denitration catalyst of the present invention exhibits high denitration effect in the selective catalytic reduction reaction at a reaction temperature of 200°C or less; therefore, the denitration catalyst of the present invention can be used in denitration at 200°C or less.

Since oxidation from $SO_2$ to $SO_3$ does not occur at 200°C or lower, oxidation of $SO_2$ to $SO_3$ is not accompanying upon the selective catalytic reduction reaction at 200°C or lower, as in the knowledge obtained by Patent Document 2 described above.

In addition, in the aforementioned description, the denitration catalyst of the present invention is used in denitration at 300°C or lower; however, it may preferably be used in denitration at 200°C or lower, or may be more preferably used in denitration at a reaction temperature of 100 to 200°C.

More preferably, it may be used in denitration at a reaction temperature of 160 to 200°C.

Alternatively, it may be used in denitration at a reaction temperature of 80 to 150°C.

In addition, the denitration catalyst of the present invention contains carbon.
Above all, the carbon content is preferably at least 0.05 wt% and no more than 3.21 wt%.
It should be noted that the carbon content may preferably be at least 0.07 wt% to no more than 3.21 wt%.
More preferably, the carbon content may be at least 0.11 wt% to no more than 3.21 wt%.
More preferably, the carbon content may be at least 0.12 wt% to no more than 3.21 wt%.
More preferably, the carbon content may be at least 0.14 wt% to no more than 3.21 wt%.
More preferably, the carbon content may be at least 0.16 wt% to no more than 3.21 wt%.
More preferably, the carbon content may be at least 0.17 wt% to no more than 3.21 wt%.
More preferably, the carbon content may be at least 0.70 wt% to no more than 3.21 wt%.
By containing carbon, it is possible to exhibit high denitration effect even in a low temperature environment, compared to a denitration catalyst such as a vanadium/titanium catalyst which is conventionally used.
If impurities get into the denitration catalyst of the present invention, the crystal structure will not be continuous since the amorphous portion is produced in the denitration catalyst, a high denitration effect is exhibited by the lines and planes in the crystal lattice distorting; however, it is assumed that higher denitration effect is exhibited by carbon existing as this impurity.
Hereinafter, a method is shown for preparing a denitration catalyst according to claim 1.
The preparation method of the above-mentioned denitration catalyst includes a step of firing a mixture of vanadate, chelate compound, a compound of tungsten and a compound of copper.
As the vanadate, for example, ammonium vanadate, magnesium vanadate, strontium vanadate, barium vanadate, zinc vanadate, lead vanadate, lithium vanadate, etc. may be used.
In addition, as the chelate compound, one having a plurality of carboxyl groups such as oxalic acid and citric acid, one having a plurality of amino groups such as acetylacetone and ethylenediamine, one having a plurality of hydroxyl groups such as ethylene glycol, etc. may be used.
In addition, the compound of tungsten or the compound of copper may be a chelate complex, hydrate, ammonium compound, or phosphate compound. The chelate complex may be a complex of oxalic acid, citric acid or the like, for example.
The hydrate may be $(NH_4)_{10}W_{12}O_{41}{\bullet}5H_2O$ or $H_3PW_{12}O_{40}{\bullet}nH_2O$, for example.
The ammonium compound may be $(NH_4)\ _{10}W_{12}O_{41}{\bullet}5H_2O$, for example.
The phosphate compound may be$H_3PW_{12}O_{40}{\bullet}nH_2O$, for example.
In addition, it is preferable for ethylene glycol to be further contained in the above-mentioned mixture.
The denitration catalyst produced by these methods can exhibit high denitration effect under a low temperature atmosphere, compared to a denitration catalyst such as a vanadium/titanium catalyst which is conventionally used.
If impurities get into the denitration catalyst of the present invention, the crystal structure will not be continuous since the amorphous portion is produced in the denitration catalyst, a high denitration effect is exhibited by the lines and planes in the crystal lattice distorting; however, it is assumed that higher denitration effect is exhibited as the carbon exists more abundantly as this impurities.
In the embodiment of the present invention, the denitration catalyst produced by the method firing a mixture of ammonium vanadate, oxalic acid and an oxalic acid complex of tungsten or copper exhibited a NO conversion rate of 80.5% to 100% in the case of no moisture coexistence, and exhibited a NO conversion rate of 55.1% to 92.2% in the case of moisture coexisting.
In addition, the denitration catalyst produced by a method in which ethylene glycol is further included in the above-mentioned mixture exhibited a NO conversion rate of 100% in the case of no moisture coexistence, and exhibited a NO conversion rate of 89% in the case of moisture coexisting.
On the other hand, for comparative purposes only, as the denitration catalyst produced by a method not including such a step, for example, the denitration catalyst produced by a method mixing ammonium vanadate and oxalic acid, but firing without mixing an oxide of the second metal, only exhibited a NO conversion rate of 82.3% in the case of no moisture coexistence, and exhibited a NO conversion rate of 47.2% in the case of moisture coexisting.
In addition, the above-mentioned firing is preferably performed at a temperature no higher than 270°C.
During production of the denitration catalyst according to the present embodiment, by firing at a temperature no higher than 270°C, which is a low temperature compared to the usual 300°C, the structure of the vanadium pentoxide crystals contained in this denitration catalyst is locally distorted, and can exhibit a high denitration effect; however, it is assumed that, above all, high denitration effect is exhibited by sites appearing at which an oxygen atom is deficient in the crystal structure of vanadium pentoxide.
It should be noted that "sites at which an oxygen atom is deficient" is also designated as "oxygen defect site".
The denitration catalyst prepared in this way is a denitration catalyst according to claim 1.
According to the denitration catalyst related to the above embodiment, the following effects are exerted.

(1) As mentioned above, the denitration catalyst according to the present embodiment is a denitration catalyst according to claim 1.

By using this denitration catalyst, upon selective catalytic reduction reaction under a reaction temperature of 200°C or less with ammonia as a reductant, it is possible to exhibit an effect whereby the denitration efficiency is even higher at low temperature, compared to the conventional technology.
In addition, absorption of NO tends to occur, and this denitration catalyst can exhibit a higher NO conversion rate.

(2) As mentioned above, in the denitration catalyst according to the present embodiment, the second metal was defined as being W.

By using this denitration catalyst, it is possible to further exhibit an effect whereby the denitration efficiency at low temperature is even higher compared to the conventional technology.
In addition, the absorption of NO tends to occur, and this denitration catalyst can further exhibit an even higher NO conversion rate.

(3) As mentioned above, in the denitration catalyst according to the present embodiment, the second metal is W, and the denitration catalyst further contains Cu as a third metal.

By using this denitration catalyst, it is possible to further exhibit an effect whereby the denitration efficiency at low temperature is even higher compared to the conventional technology.
In addition, absorption of NO tends to occur even more, and NO further oxidizes to $NO_2$, whereby this denitration catalyst can further exhibit a higher NO conversion rate by a catalytic reaction mechanism under NO and $NO_2$ coexistence.

(4) As mentioned above, the denitration catalyst according to the present embodiment contains an oxide of composite metal of vanadium and tungsten.

By using this denitration catalyst, it is possible to further exhibit an effect whereby the denitration efficiency at low temperature is even higher compared to the conventional technology.
In addition, the absorption of NO tends to occur, whereby this denitration catalyst can further exhibit an even higher NO conversion rate.

(5) As mentioned above, the denitration catalyst according to the present embodiment is used in denitration at 300°C or lower.
In the selective catalytic reduction reaction at a reaction temperature of 200°C or less using the denitration catalyst according to the above embodiment, a high denitration effect is thereby brought about, without oxidizing $SO_2$.
(6) As mentioned above, the denitration catalyst according to the present embodiment further contains carbon.
The denitration catalyst according to the present embodiment can thereby exhibit an even higher NO conversion rate, under conditions not coexisting with moisture.
(7) As mentioned above, the carbon content is preferably at least 0.05 wt%.
The denitration catalyst according to the present embodiment can thereby exhibit a higher NO conversion rate, under conditions not coexisting with moisture.
(8) As mentioned above, the method of manufacturing the denitration catalyst according to the present embodiment preferably includes a step of firing a mixture of vanadate, chelate compound, compound of tungsten and a compound of copper.
By the tungsten being contained in the denitration catalyst according to the present embodiment, the denitration effect improves in the selective catalytic reduction reaction at a reaction temperature of 200°C or less using the denitration catalyst according to the above embodiment.
(9) Ethylene glycol is preferably further contained in the above-mentioned mixture.
Carbon and tungsten are contained in the denitration catalyst according to the present embodiment, and the denitration effect thereby improves in the selective catalyst reduction reaction at the reaction temperature of 200°C or less using the denitration catalyst according to the present embodiment.
(10) The step of firing in the above-mentioned method for manufacturing is preferably a step of firing at a temperature no higher than 270°C.

The structure of the vanadium pentoxide crystals contained in the denitration catalyst may be locally distorted, and it is thereby possible to exhibit a high denitration effect.

EXAMPLES

Hereinafter, Examples of the present invention will be specifically explained together with Comparative Examples. It should be noted that the present invention is not to be limited by these Examples.

1 Vanadium Catalyst Containing Various Metals as Second Metal

The catalysts described in this section fall outside the scope of claim 1 as they do not include the second and third metal specified in claim 1.

1.1 Each Example and Comparative Example

[Example 1]

A precursor complex was synthesized by dissolving 4.96 g (42.4 mmol) of ammonium vanadate ($NH_4VO_3$) and 11.5 g (127.6 mmol) of oxalic acid ($(COOH)_2$) in pure water.
To this precursor complex, oxalic acid complex of cobalt (Co), which is the second metal, was added, so that the cobalt (Co) becomes 3.5 mol% by metallic atom conversion, i.e. $Co_3O_4$ becomes 3.1 wt% by metal oxide conversion.
By firing the obtained vanadium-dissimilar metal complex mixture twice for 4 hours at a temperature of 300°C by an electric furnace, a denitration catalyst of vanadium pentoxide ($V_2O_5$) containing cobalt (Co) was obtained.

[Example 2]

A precursor complex was synthesized by dissolving 4.96 g (42.4 mmol) of ammonium vanadate ($NH_4VO_3$) and 11.5 g (127.6 mmol) of oxalic acid ($(COOH)_2$) in pure water.
To this precursor complex, oxalic acid complex of tungsten (W), which is the second metal, was added, so that the tungsten (W) becomes 3.5 mol% by metallic atom conversion, i.e. $WO_3$ becomes 8.4 wt% by metal oxide conversion.
By firing the obtained vanadium-dissimilar metal complex mixture twice for 4 hours at a temperature of 300°C by an electric furnace, a denitration catalyst of vanadium pentoxide ($V_2O_5$) containing tungsten (W) was obtained.

[Example 3]

A precursor complex was synthesized by dissolving 4.96 g (42.4 mmol) of ammonium vanadate ($NH_4VO_3$) and 11.5 g (127.6 mmol) of oxalic acid ($(COOH)_2$) in pure water.
To this precursor complex, oxalic acid complex of molybdenum (Mo), which is the second metal, was added, so that the molybdenum (Mo) becomes 3.5 mol% by metallic atom conversion, i.e. $MoO_3$ becomes 5.4 wt% by metal oxide conversion.
By firing the obtained vanadium-dissimilar metal complex mixture twice for 4 hours at a temperature of 300°C by an electric furnace, a denitration catalyst of vanadium pentoxide ($V_2O_5$) containing molybdenum (Mo) was obtained.

[Example 4]

A precursor complex was synthesized by dissolving 4.96 g (42.4 mmol) of ammonium vanadate ($NH_4VO_3$) and 11.5 g (127.6 mmol) of oxalic acid ($(COOH)_2$) in pure water.
To this precursor complex, oxalic acid complex of niobium (Nb), which is the second metal, was added, so that the niobium (Nb) becomes 3.5 mol% by metallic atom conversion, i.e. $Nb_2O_5$ becomes 5.0 wt% by metal oxide conversion.
By firing the obtained vanadium-dissimilar metal complex mixture twice for 4 hours at a temperature of 300°C by an electric furnace, a denitration catalyst of vanadium pentoxide ($V_2O_5$) containing niobium (Nb) was obtained.

[Example 5]

A precursor complex was synthesized by dissolving 4.96 g (42.4 mmol) of ammonium vanadate ($NH_4VO_3$) and 11.5 g (127.6 mmol) of oxalic acid ($(COOH)_2$) in pure water.
To this precursor complex, oxalic acid complex of iron (Fe), which is the second metal, was added, so that the iron (Fe) becomes 3.5 mol% by metallic atom conversion, i.e. $Fe_2O_3$ becomes 3.1 wt% by metal oxide conversion.
By firing the obtained vanadium-dissimilar metal complex mixture twice for 4 hours at a temperature of 300°C by an electric furnace, a denitration catalyst of vanadium pentoxide ($V_2O_5$) containing iron (Fe) was obtained.

[Example 6]

A precursor complex was synthesized by dissolving 4.96 g (42.4 mmol) of ammonium vanadate ($NH_4VO_3$) and 11.5 g (127.6 mmol) of oxalic acid ($(COOH)_2$) in pure water.
To this precursor complex, 0.113 g of nickel (Ni), which is the second metal, was added as nickel carbonate, so that the nickel (Ni) becomes 3.5 mol% by metallic atom conversion, i.e. NiO becomes 2.9 wt% by metal oxide conversion.
By firing the obtained vanadium-dissimilar metal complex mixture twice for 4 hours at a temperature of 300°C by an electric furnace, a denitration catalyst of vanadium pentoxide ($V_2O_5$) containing nickel (Ni) was obtained.

[Example 7]

A precursor complex was synthesized by dissolving 4.96 g (42.4 mmol) of ammonium vanadate ($NH_4VO_3$) and 11.5 g (127.6 mmol) of oxalic acid ($(COOH)_2$) in pure water.
To this precursor complex, oxalic acid complex of copper (Cu), which is the second metal, was added, so that the copper (Cu) becomes 3.5 mol% by metallic atom conversion, i.e. CuO becomes 3.0 wt% by metal oxide conversion.
By firing the obtained vanadium-dissimilar metal complex mixture twice for 4 hours at a temperature of 300°C by an electric furnace, a denitration catalyst of vanadium pentoxide ($V_2O_5$) containing copper (Cu) was obtained.

[Example 8]

A precursor complex was synthesized by dissolving 4.96 g (42.4 mmol) of ammonium vanadate ($NH_4VO_3$) and 11.5 g (127.6 mmol) of oxalic acid ($(COOH)_2$) in pure water.
To this precursor complex, oxalic acid complex of zinc (Zn), which is the second metal, was added, so that the zinc (Zn) becomes 3.5 mol% by metallic atom conversion, i.e. ZnO becomes 3.1 wt% by metal oxide conversion.
By firing the obtained vanadium-dissimilar metal complex mixture twice for 4 hours at a temperature of 300°C by an electric furnace, a denitration catalyst of vanadium pentoxide ($V_2O_5$) containing zinc (Zn) was obtained.

[Example 9]

A precursor complex was synthesized by dissolving 4.96 g (42.4 mmol) of ammonium vanadate ($NH_4VO_3$) and 11.5 g (127.6 mmol) of oxalic acid ($(COOH)_2$) in pure water.
To this precursor complex, oxalic acid complex of tin (Sn), which is the second metal, was added, so that the tin (Sn) becomes 3.5 mol% by metallic atom conversion, i.e. $SnO_2$ becomes 5.6 wt% by metal oxide conversion.
By firing the obtained vanadium-dissimilar metal complex mixture twice for 4 hours at a temperature of 300°C by an electric furnace, a denitration catalyst of vanadium pentoxide ($V_2O_5$) containing tin (Sn) was obtained.

[Example 10]

A precursor complex was synthesized by dissolving 4.96 g (42.4 mmol) of ammonium vanadate ($NH_4VO_3$) and 11.5 g (127.6 mmol) of oxalic acid ($(COOH)_2$) in pure water.
To this precursor complex, oxalic acid complex of cerium (Ce), which is the second metal, was added, so that the cerium (Ce) becomes 3.5 mol% by metallic atom conversion, i.e. $CeO_2$ becomes 6.4 wt% by metal oxide conversion.
By firing the obtained vanadium-dissimilar metal complex mixture twice for 4 hours at a temperature of 300°C by an electric furnace, a denitration catalyst of vanadium pentoxide ($V_2O_5$) containing cerium (Ce) was obtained.

[Example 11]

A precursor complex was synthesized by dissolving 4.96 g (42.4 mmol) of ammonium vanadate ($NH_4VO_3$) and 11.5 g (127.6 mmol) of oxalic acid ($(COOH)_2$) in pure water.
To this precursor complex, oxalic acid complex of manganese (Mn), which is the second metal, was added, so that the manganese (Mn) becomes 3.5 mol% by metallic atom conversion, i.e. $MnO_2$ becomes 3.3 wt% by metal oxide conversion.
By firing the obtained vanadium-dissimilar metal complex mixture twice for 4 hours at a temperature of 300°C by an electric furnace, a denitration catalyst of vanadium pentoxide ($V_2O_5$) containing manganese (Mn) was obtained.

[Comparative Example 1]

A precursor complex was synthesized by dissolving 4.96 g (42.4 mmol) of ammonium vanadate ($NH_4VO_3$) and

11.5 g (127.6 mmol) of oxalic acid ($(COOH)_2$).

By firing this precursor complex twice for 4 hours at a temperature of 300°C by an electric furnace, a denitration catalyst of vanadium pentoxide ($V_2O_5$) not containing the second metal was obtained.

1.2 Evaluation

1.2.1 NO Conversion Rate

Under the conditions of Table 1 below, the $NH_3$-SCR reaction was conducted using a fixed bed flow-type reactor at a reaction temperature of 150°C.

In the gas passing through the catalyst layer, NO was analyzed by a Jasco FT-IR-4700.

[Table 1]

(Table 1) $NH_3$-SCR measurement conditions

| | |
|---|---|
| Reaction temperature | 150°C |
| Catalyst amount | 0.375g |
| Gas flow rate | 250mlmin$^{-1}$ |
| | NO: 250ppm, $NH_3$: 250ppm, $O_2$: 4vol% in Ar, 10% $H_2O$ (steam atmosphere) |
| Space velocity | 40,000 mLh$^{-1}$g$_{cat}^{-1}$ |

In addition, the NO conversion rate was calculated by Formula (1) noted below.

It should be noted that $No_{in}$ is the NO concentration at the reaction tube inlet, and $NO_{out}$ is the NO concentration of the reaction tube outlet.

Formula 1

$$\text{NO conversion rate [\%]} = \frac{NO_{in} - NO_{out}}{NO_{in}} \times 100 \quad \text{(Formula 1)}$$

(Measurement Results)

Table 2 shows the NO conversion rates of each vanadium pentoxide catalyst for both a case of moisture not coexisting and the case of a 10% steam atmosphere.

FIG. 1 is a plot graphing this Table 2.

[Table 2]

(Table 2) NOx conversion rate of vanadium pentoxide catalyst

| Sample | | NO conversion rate/% | |
|---|---|---|---|
| | | dry | wet (10%) |
| Example1 | (Co) | 89.1 | 73.7 |
| Example2 | (W) | 100 | 92.2 |
| Example3 | (Mo) | 91.2 | 71.3 |
| Example4 | (Nb) | 96.2 | 68.8 |
| Example5 | (Fe) | 80.8 | 55.1 |
| Example6 | (Ni) | 80.5 | 70.1 |
| Example7 | (Cu) | 98.8 | 81.0 |
| Example8 | (Zn) | 85.8 | 65.4 |
| Example9 | (Sn) | 82.6 | 62.4 |
| Example10 | (Ce) | 82.1 | 71.7 |
| Example11 | (Mn) | 86.0 | 66.0 |
| Comparative Example1 | (Only $V_2O_5$) | 82.3 | 47.2 |

In the case of the 10% steam atmosphere, the denitration catalyst of the Examples generally exhibited higher NO conversion rate than the denitration catalyst of the Comparative Examples in both the case of moisture not coexisting and the case of coexistence with moisture. Above all, the denitration catalyst made by adding cobalt, tungsten, molybdenum, niobium, copper, zinc or manganese to ammonium vanadate exhibited a high NO conversion rate.

Thereamong, Example 2 (adding tungsten) exhibited the highest NO conversion rate, in both the case of moisture not coexisting and the case of moisture coexisting.

In addition, under the conditions of Table 3 below, the $NH_3$-SCR reaction was conducted using a fixed bed flow-type reactor at a reaction temperature of 150°C.

In the gas passing through the catalyst layer, NO was analyzed by a Jasco FT-IR-4700.

[Table 3]

(Table 3) $NH_3$-SCR measurement conditions

| | |
|---|---|
| Reaction temperature | 150°C |
| Catalyst amount | 0.375g |
| Gas flow rate | 250mlmin$^{-1}$ |
| | NO: 250ppm, $NH_3$: 250ppm, $O_2$: 4vol% in Ar, 2.3% $H_2O$ (steam atmosphere) |
| Space velocity | 40,000 mLh$^{-1}$g$_{cat}^{-1}$ |

(Measurement Results)

Table 4 shows the NO conversion rates of each vanadium pentoxide catalyst for both a case of moisture not coexisting and the case of a 2.3% steam atmosphere.

[Table 4]

(Table 4) NOx conversion rate of vanadium pentoxide catalyst

| Sample | | NO conversion rate/% | |
|---|---|---|---|
| | | dry | wet (2.3%) |
| Example1 | (Co) | 94.6 | 69.4 |
| Example2 | (W) | 92.0 | 64.0 |
| Example3 | (Mo) | 97.0 | 62.0 |
| Example4 | (Nb) | 96.7 | 61.7 |
| Example5 | (Ce) | 89.8 | 52.9 |
| Example6 | (Sn) | 88.1 | 45.5 |
| Example7 | (Fe) | 74.5 | 33.9 |
| Comparative Example1 | (None) | 75.5 | 32.0 |

In both a case of moisture not coexisting and the case of a 2.3% steam atmosphere, the denitration catalysts of the Examples generally exhibited a higher NO conversion rate than the denitration catalysts of the Comparative Examples.

Above all, the denitration catalyst made by adding cobalt, tungsten, molybdenum, or niobium, to ammonium vanadate exhibited a high NO conversion rate.

Thereamong, for the case of moisture not coexisting, Example 3 (adding molybdenum) exhibited the highest NO conversion rate, and for the case of moisture coexisting, Example 1 (adding cobalt) exhibited the highest NO conversion rate.

2 Vanadium Catalyst Containing Cobalt as Second Metal

The catalysts described in this section fall outside the scope of claim 1.

2.1 Each Example

As mentioned above, for the vanadium catalysts of Examples 1 to 11, in the case of moisture coexisting, since Example 1 (adding cobalt) exhibited relative high NO conversion rate, the vanadium catalyst according to each of the Examples below were produced by varying the additive amount of cobalt.

[Example 12]

A precursor complex was synthesized by dissolving ammonium vanadate ($NH_4VO_3$) and oxalic acid ($(COOH)_2$) in pure water. To this precursor complex, oxalic acid complex of cobalt (Co), which is the second metal, was added, so that $Co_3O_4$ becomes 1 wt% by metal oxide conversion.
By firing the obtained vanadium-cobalt complex mixture twice for 4 hours at a temperature of 300°C by an electric furnace, a denitration catalyst of vanadium pentoxide ($V_2O_5$) containing cobalt (Co) was obtained.

[Example 13]

A precursor complex was synthesized by dissolving ammonium vanadate ($NH_4VO_3$) and oxalic acid ($(COOH)_2$) in pure water.
To this precursor complex, oxalic acid complex of cobalt (Co), which is the second metal, was added, so that $Co_3O_4$ becomes 3 wt% by metal oxide conversion.
By firing the obtained vanadium-cobalt complex mixture twice for 4 hours at a temperature of 300°C by an electric furnace, a denitration catalyst of vanadium pentoxide ($V_2O_5$) containing cobalt (Co) was obtained.

[Example 14]

A precursor complex was synthesized by dissolving ammonium vanadate ($NH_4VO_3$) and oxalic acid ($(COOH)_2$) in pure water.
To this precursor complex, oxalic acid complex of cobalt (Co), which is the second metal, was added, so that $Co_3O_4$ becomes 5 wt% by metal oxide conversion.
By firing the obtained vanadium-cobalt complex mixture twice for 4 hours at a temperature of 300°C by an electric furnace, a denitration catalyst of vanadium pentoxide ($V_2O_5$) containing cobalt (Co) was obtained.

[Example 15]

A precursor complex was synthesized by dissolving ammonium vanadate ($NH_4VO_3$) and oxalic acid ($(COOH)_2$) in pure water.
To this precursor complex, oxalic acid complex of cobalt (Co), which is the second metal, was added, so that $Co_3O_4$ becomes 6 wt% by metal oxide conversion.
By firing the obtained vanadium-cobalt complex mixture twice for 4 hours at a temperature of 300°C by an electric furnace, a denitration catalyst of vanadium pentoxide ($V_2O_5$) containing cobalt (Co) was obtained.

[Example 16]

A precursor complex was synthesized by dissolving ammonium vanadate ($NH_4VO_3$) and oxalic acid ($(COOH)_2$) in pure water.
To this precursor complex, oxalic acid complex of cobalt (Co), which is the second metal, was added, so that $Co_3O_4$ becomes 7 wt% by metal oxide conversion.
By firing the obtained vanadium-cobalt complex mixture twice for 4 hours at a temperature of 300°C by an electric furnace, a denitration catalyst of vanadium pentoxide ($V_2O_5$) containing cobalt (Co) was obtained.

[Example 17]

A precursor complex was synthesized by dissolving ammonium vanadate ($NH_4VO_3$) and oxalic acid ($(COOH)_2$) in pure water.
To this precursor complex, oxalic acid complex of cobalt (Co), which is the second metal, was added, so that $Co_3O_4$ becomes 8 wt% by metal oxide conversion.
By firing the obtained vanadium-cobalt complex mixture twice for 4 hours at a temperature of 300°C by an electric furnace, a denitration catalyst of vanadium pentoxide ($V_2O_5$) containing cobalt (Co) was obtained.

[Example 18]

A precursor complex was synthesized by dissolving ammonium vanadate ($NH_4VO_3$) and oxalic acid ($(COOH)_2$) in pure water.
To this precursor complex, oxalic acid complex of cobalt (Co), which is the second metal, was added, so that

$Co_3O_4$ becomes 10 wt% by metal oxide conversion.

By firing the obtained vanadium-cobalt complex mixture twice for 4 hours at a temperature of 300°C by an electric furnace, a denitration catalyst of vanadium pentoxide ($V_2O_5$) containing cobalt (Co) was obtained.

It should be noted that Table 5 below shows the charging amount of precursor during cobalt introduction in Examples 12 to 18.

[Table 5]

(Table 5) Charging amount of precursor during cobalt introduction

| | $Co_3O_4$ wt % | Co complex/mmol | Co complex/g | $NH_4VO_3$/mmol | $NH_4VO_3$/g | Oxalic acid/mmol | Oxalic acid/g |
|---|---|---|---|---|---|---|---|
| Comparative Example1 | 0 | 0 | 0 | 43.9 | 5.13 | 131.7 | 11.86 |
| Example12 | 1 | 0.48 | 0.23 | 43.4 | 5.07 | 130.26 | 11.73 |
| Example13 | 3 | 1.52 | 0.74 | 42.4 | 4.96 | 127.14 | 11.45 |
| Example14 | 5 | 2.52 | 1.23 | 41.4 | 4.84 | 124.14 | 11.18 |
| Example15 | 6 | 2.88 | 1.4 | 41 | 4.8 | 123.07 | 11.08 |
| Example16 | 7 | 3.4 | 1.63 | 40.5 | 4.74 | 121.63 | 10.95 |
| Example17 | 8 | 3.83 | 1.87 | 40.1 | 4.69 | 120.19 | 10.82 |
| Example18 | 10 | 5.75 | 2.33 | 39.1 | 4.57 | 117.31 | 10.56 |

## 2.2 Evaluation

### 2.2.1 NO Conversion Rate

(Measurement Method)

Under the conditions of the above Table 3, the $NH_3$-SCR reaction was conducted using a fixed bed flow-type reactor at a reaction temperature of 150°C.

In the gas passing through the catalyst layer, NO was analyzed by a Jasco FT-IR-4700.

In addition, the NO conversion rate was calculated by Formula (1) above.

(Measurement Results)

Table 6 shows the NO conversion rates for both the case of moisture not coexisting and the case under coexistence of moisture of each vanadium oxide catalyst.

FIG. 2 is a plot graphing this Table 6.

[Table 6]

(Table 6) NOx conversion rate of vanadium pentoxide catalyst

| Sample | | NO conversion rate/% | |
|---|---|---|---|
| | | dry | wet (2.3%) |
| Comparative Example 1 | (None) | 76 | 32 |
| Example12 | (1wt%) | 79 | 38 |
| Example13 | (3wt%) | 94 | 69 |
| Example14 | (5wt%) | 95 | 65 |
| Example15 | (6wt%) | 100 | 77 |
| Example16 | (7wt%) | 100 | 86 |
| Example17 | (8wt%) | 99 | 90 |
| Example18 | (10wt%) | 96 | 65 |

In both the case of moisture not coexisting and the case under coexistence of moisture, the denitration catalyst of the Examples shows higher NO conversion rate than the denitration catalyst of the Comparative Example.

Above all, in the case of moisture not coexisting, Example 15 (6 wt%) and Example 16 (7 wt%) showed the highest NO conversion rates, and in the case of moisture coexisting, Example 17 (8 wt%) showed the highest NO conversion rate.

2.2.2 Powder X-ray Diffraction

(Analysis Method)

As power X-ray diffraction, measurement was performed using Cu-Kα by a Rigaku Smart Lab.

(Analysis Results)

FIG. 3 shows the powder XRD (X-Ray Diffraction) patterns of Example 12 (1 wt%), Example 13 (3 wt%), Example 15 (6 wt%), Example 18 (10 wt%) and Comparative Example 1 (None: 0 wt%).

It showed that, when $V_2O_5$ which is the stabilized phase exists as the main component, and raising the added amount of Co, the $Co_3O_4$ phase also appeared.

2.2.3 Raman Spectrum

(Measurement Method)

In order to analyze the crystal structure of each vanadium pentoxide catalyst, the Raman spectra was measured by Raman spectroscopy.

In more detail, a small amount of a sample of each catalyst was placed on a slide of glass, and the Raman spectra were measured by a Raman spectrometer.

As the measurement apparatus, an NRS-4100 Raman spectrophotometer manufactured by JASCO Corp. was used.

(Measurement Results)

FIG. 4 shows the Raman spectra of each catalyst.

It is shown that, when raising the added amount of Co, the crystal structure of $V_2O_5$ collapses, and the pattern intensity weakens.

2.2.4 X-ray Photoelectron Spectrum (XPS) Measurement

(Measurement Method)

For Example 12 (1 wt%), Example 13 (3 wt%), Example 15 (6 wt%), Example 18 (10 wt%) and Comparative Example 1 (None: 0 wt%), the X-ray photoelectron spectra (XPS: X-ray photoelectron spectrum) were measured in order to analyze the electronic state.

In more detail, powder samples of each catalyst of the Examples and Comparative Examples were fixed to a sample holder using carbon tape, and the X-ray photoelectron spectrum was measured.

As the measurement device, a JPS-9010MX photoelectron spectrometer manufactured by JEOL Ltd. was used.

(Measurement Results)

FIG. 5A shows the XPS spectra in the V2p region. FIG. 5B shows the XPS spectra in the Co2p region.

When raising the added amount of Co, it is shown that $V^{4+}$ and $Co^{2+}$ components increased.

3 Vanadium Catalyst Containing Tungsten as Second Metal

The catalysts described in this section fall outside the scope of claim 1.

3.1 Case of Varying Added Amount of Tungsten

3.1.1 Each Example and Comparative Example

As mentioned above, for the vanadium catalysts of Examples 1 to 11, in both the case of moisture not coexisting and the case of moisture coexisting, since Example 2 (adding tungsten) showed the highest NO conversion rate, the vanadium catalysts according to each of the below Examples were produced by varying the added amount of tungsten.

It should be noted that, not only was the added amount of tungsten simply varied, the added amount of tungsten was varied for each of the cases of using $K_2WO_4$ and cases of using $H_3PW_{12}O_{40}$•$nH_2O$ as the precursor, as described later.

[Example 19]

To a mixture of ammonium vanadate ($NH_4VO_3$), 43.9 mmol of $K_2WO_4$ and 20 ml of pure water, 11.9 g (131.7 mmol) of oxalic acid ($(COOH)_2$) was added, and after stirring at room temperature for 10 minutes, it was stirred for 12 hours at 70°C.

By firing this precursor complex for 4 hours at 300°C, a denitration catalyst of vanadium pentoxide ($V_2O_5$) containing tungsten (W) was obtained.

It should be noted that, for W in the produced denitration catalyst, the amount of ammonium vanadate as a raw material was adjusted so that the total weight ratio by metal oxide ($WO_3$) conversion became 4.9 wt%.

[Example 20]

To a mixture of ammonium vanadate ($NH_4VO_3$), 43.9 mmol of $K_2WO_4$ and 20 ml of pure water, 11.9 g (131.7 mmol) of oxalic acid ($(COOH)_2$) was added, and after stirring at room temperature for 10 minutes, it was stirred for 12 hours at 70°C.

By firing this precursor complex for 4 hours at 300°C, a denitration catalyst of vanadium pentoxide ($V_2O_5$) containing tungsten (W) was obtained.

It should be noted that, for W in the produced denitration catalyst, the amount of ammonium vanadate as a raw material was adjusted so that the total weight ratio by metal oxide ($WO_3$) conversion became 11.8 wt%.

[Example 21]

To a mixture of ammonium vanadate ($NH_4VO_3$), 43.9 mmol of $K_2WO_4$ and 20 ml of pure water, 11.9 g (131.7 mmol) of oxalic acid was added, and after stirring at room temperature for 10 minutes, it was stirred for 12 hours at 70°C.

By firing this precursor complex for 4 hours at 300°C, a denitration catalyst of vanadium pentoxide ($V_2O_5$) containing tungsten (W) was obtained.

It should be noted that, for W in the produced denitration catalyst, the amount of ammonium vanadate as a raw material was adjusted so that the total weight ratio by metal oxide ($WO_3$) conversion became 22.1 wt%.

[Comparative Example 2]

To a mixture of ammonium vanadate ($NH_4VO_3$), 43.9 mmol of $K_2WO_4$ and 20 ml of pure water, 11.9 g (131.7 mmol) of oxalic acid ($(COOH)_2$) was added, and after stirring at room temperature for 10 minutes, it was stirred for 12 hours at 70°C.

By firing this precursor complex for 4 hours at 300°C, a denitration catalyst of vanadium pentoxide ($V_2O_5$) containing tungsten (W) was obtained.

It should be noted that, for W in the produced denitration catalyst, the amount of ammonium vanadate as a raw material was adjusted so that the total weight ratio by metal oxide ($WO_3$) conversion became about 100 wt%.

It should be noted that Table 7 below shows the charging amount of precursor during tungsten introduction in Examples 19 to 21, and Comparative Example 2.

[Table 7]

| (Table 7) charging amount of precursor during cobalt introduction | | | | | | | |
|---|---|---|---|---|---|---|---|
| | $WO_3$ wt% | Precursor/mmol | Precursor/g | $NH_4VO_3$/mmol | $NH_4VO_3$/g | Oxalic acid/mmol | Oxalic acid/g |
| Example19 | 4.9 | 0.88 | 0.29 | 43 | 5.04 | 131.70 | 11.86 |
| Example20 | 11.8 | 2.20 | 0.72 | 42 | 4.88 | 131.70 | 11.86 |
| Example21 | 22.1 | 4.39 | 1.43 | 40 | 4.63 | 131.70 | 11.86 |
| Comparative Example1 | 100 | 43.93 | 14.32 | 0.0 | 0.00 | 131.70 | 11.86 |

[Example 22]

To a mixture of ammonium vanadate ($NH_4VO_3$), $H_3PW_{12}O_{40}$•$nH_2O$ and 20 ml of pure water, 11.9 g (131.7 mmol) of oxalic acid ($(COOH)_2$) was added, and after stirring at room temperature for 10 minutes, it was stirred for 12 hours at 70°C.

By firing this precursor complex for 4 hours at 300°C, a denitration catalyst of vanadium pentoxide ($V_2O_5$) containing tungsten (W) was obtained.

It should be noted that, for W in the produced denitration catalyst, the amount of ammonium vanadate and $H_3PW_{12}O_{40}$•$nH_2O$ as raw materials were adjusted so that the total weight ratio by metal oxide ($WO_3$) conversion became 38.4 wt%.

[Comparative Example 3]

To a mixture of ammonium vanadate ($NH_4VO_3$), $H_3PW_{12}O_{40}$•$nH_2O$ and 20 ml of pure water, 11.9 g (131.7 mmol) of oxalic acid ($(COOH)_2$) was added, and after stirring at room temperature for 10 minutes, it was stirred for 12 hours at 70°C.

By firing this precursor complex for 4 hours at 300°C, a denitration catalyst of vanadium pentoxide ($V_2O_5$) containing tungsten (W) was obtained.

It should be noted that, for W in the produced denitration catalyst, the amount of ammonium vanadate and $H_3PW_{12}O_{40}$•$nH_2O$ as raw materials were adjusted so that the total weight ratio by metal oxide ($WO_3$) conversion became 61.7 wt%.

[Comparative Example 4]

To a mixture of ammonium vanadate ($NH_4VO_3$), $H_3PW_{12}O_{40}$•$nH_2O$ and 20 ml of pure water, 11.9 g (131.7 mmol) of oxalic acid ($(COOH)_2$) was added, and after stirring at room temperature for 10 minutes, it was stirred for 12 hours at 70°C.

By firing this precursor complex for 4 hours at 300°C, a denitration catalyst of vanadium pentoxide ($V_2O_5$) containing tungsten (W) was obtained.

It should be noted that, for W in the produced denitration catalyst, the amount of ammonium vanadate and $H_3PW_{12}O_{40}$•$nH_2O$ as raw materials were adjusted so that the total weight ratio by metal oxide ($WO_3$) conversion became 77.3 wt%.

[Comparative Example 5]

To a mixture of ammonium vanadate ($NH_4VO_3$), $H_3PW_{12}O_{40}$•$nH_2O$ and 20 ml of pure water, 11.9 g (131.7 mmol) of oxalic acid ($(COOH)_2$) was added, and after stirring at room temperature for 10 minutes, it was stirred for 12 hours at 70°C.

By firing this precursor complex for 4 hours at 300°C, a denitration catalyst of vanadium pentoxide ($V_2O_5$) containing tungsten (W) was obtained.

It should be noted that, for W in the produced denitration catalyst, the amount of ammonium vanadate and $H_3PW_{12}O_{40}$•$nH_2O$ as raw materials were adjusted so that the total weight ratio by metal oxide ($WO_3$) conversion became 84.4 wt%.

[Comparative Example 6]

To a mixture of ammonium vanadate ($NH_4VO_3$), $H_3PW_{12}O_{40}$•$nH_2O$ and 20 ml of pure water, 11.9 g (131.7 mmol) of oxalic acid ($(COOH)_2$) was added, and after stirring at room temperature for 10 minutes, it was stirred for 12 hours at 70°C.

By firing this precursor complex for 4 hours at 300°C, a denitration catalyst of vanadium pentoxide ($V_2O_5$) containing tungsten (W) was obtained.

It should be noted that, for W in the produced denitration catalyst, the amount of ammonium vanadate and $H_3PW_{12}O_{40}$•$nH_2O$ as raw materials were adjusted so that the total weight ratio by metal oxide ($WO_3$) conversion became about 100 wt%.

It should be noted that Table 8 below shows the charging amount of precursor during tungsten introduction in Example 22, and Comparative Examples 3 to 6.

[Table 8]

| (Table 8) charging amount of precursor during cobalt introduction | | | | | | | |
|---|---|---|---|---|---|---|---|
| | $WO_3$ Wt% | Precursor/mmol | Precursor/g | $NH_4VO_3$/mmol | $NH_4VO_3$/g | Oxalic acid/mmol | Oxalic acid/g |
| Example22 | 38.4 | 0.88 | 2.53 | 43.05 | 5.04 | 131.70 | 11.86 |
| Comparative Example3 | 61.7 | 2.20 | 6.33 | 41.73 | 4.88 | 131.70 | 11.86 |
| Comparative Example4 | 77.3 | 4.39 | 12.65 | 39.54 | 4.63 | 131.70 | 11.86 |
| Comparative Example5 | 84.4 | 6.59 | 18.98 | 37.34 | 4.37 | 131.70 | 11.86 |
| Comparative Example6 | 100 | 4.88 | 14.06 | 0.00 | 0.00 | 131.70 | 11.86 |

3.1.2 Evaluation

3.1.2.1 Outline

Under the conditions of the above Table 3, the $NH_3$-SCR reaction was conducted using a fixed bed flow-type reactor at a reaction temperature of 150°C.

In the gas passing through the catalyst layer, NO was analyzed by a Jasco FT-IR-4700.

In addition, the NO conversion rate was calculated by Formula (1) above.

(Measurement Results)

Table 9 shows the NO conversion rates for both the case of moisture not coexisting and the case of coexistence of moisture of each vanadium pentoxide catalyst.

FIG. 6 is a plot graphing this Table 9.

[Table 9]

(Table 9) NOx conversion rate of vanadium pentoxide catalyst

| Sample | | NO conversion rate/% | |
|---|---|---|---|
| | | dry | wet(2.3%) |
| Comparative Example1 | (None) | 76 | 32 |
| Example20 | (12wt%) | 86 | 43 |
| Example21 | (22wt%) | 96 | 55 |
| Example22 | (38wt%) | 83 | 50 |
| Comparative Example3 | (62wt%) | 52 | 21 |
| Comparative Example4 | (77wt%) | 69 | 28 |
| Comparative Example2 | (100wt%) | 4 | 0 |
| Comparative Example6 | (100wt%) | 3 | 0 |

In both the case of moisture not coexisting and the case under coexistence of moisture, when comparing Comparative Example 1 having a tungsten content of 0 wt% and Comparative Examples 2 to 4 and 6 having a tungsten content of 52 wt% to 100 wt%, it generally showed that addition is effective between the added amounts of tungsten of 12 wt% to 38 wt%.

Hereinafter, for each of a case of using $K_2WO_4$ and a case of using $H_3PW_{12}O_{40}$•$nH_2O$ as the precursor, elemental analysis was conducted by powder X-ray diffraction and SEM-EDS, and the NO conversion rate for every tungsten content ratio was graphed for each case.

3.2.2 Case using $K_2WO_4$ as Precursor

3.1.2.2.1 Powder X-ray Diffraction and Elemental Analysis

(Measurement Method)

The powder X-ray diffraction, measurement was performed using Cu-Kα by a Rigaku Smart Lab.

In addition, elemental analysis by SEM-EDS was conducted.

(Measurement Results)

FIG. 7 shows the powder XRD patterns of Example 19 (4.9 wt%), Example 20 (11.8 wt%), Example 21 (22.1 wt%), Comparative Example 1 (0 wt%) and Comparative Example 2 (100 wt%).

In addition, FIG. 8 shows the proportion (%) of tungsten element in the case of establishing the horizontal axis as mol% of $K_2WO_4$.

From FIGS. 7 and 8, it was shown that, by increasing $K_2WO_4$, the crystalline phase became monoclinic $WO_3$ (100 wt%) through triclinic $V_4O_7$ (12 wt%), and the ratio of tungsten atoms included in the catalyst proportionally increased.

3.1.2.2.2 NO Conversion Rate

(Measurement Results)

Table 10 shows the NO conversion rates for both the case of moisture not coexisting and the case of coexistence of moisture of each vanadium pentoxide catalyst.

FIG. 9 is a plot graphing this Table 10.

[Table 10]

(Table 10) NOx conversion rate of vanadium pentoxide catalyst

| Sample | | NO conversion rate/% | |
|---|---|---|---|
| | | dry | wet(2.3%) |
| Comparative Example1 | (None) | 76 | 32 |
| Example20 | (12wt%) | 86 | 43 |
| Example21 | (22wt%) | 96 | 55 |
| Comparative Example2 | (100wt%) | 4 | 0 |

As found from Table 10 and FIG. 9, the catalytic activity reached a maximum (96.3%) with triclinic $V_4O_7$ (22.1 wt%).

In addition, the excess $K_2WO_4$ leads to a decline in catalytic activity, and there was no catalytic activity with the content of tungsten of 100 wt%.

3.1.2.3 Case using $H_3PW_{12}O_{40}$•$nH_2O$ as Precursor

3.1.2.3.1 Powder X-ray Diffraction and Elemental Analysis

(Measurement Method)

The power X-ray diffraction, measurement was performed using Cu-Kα by a Rigaku Smart Lab.

In addition, elemental analysis by SEM-EDS was conducted.

(Measurement Results)

FIG. 10 shows the powder XRD patterns of Example 22 (38.4 wt%), Comparative Example 3 (61.7 wt%), Comparative Example 4 (77.3 wt%), Comparative Example 5 (84.4 wt%) and Comparative Example 6 (100 wt%). In addition, FIG. 11 shows the proportion (%) of tungsten element in the case of establishing the horizontal axis as mol% of $H_3PW_{12}O_{40}$•$nH_2O$.

From FIGS. 10 and 11, it is shown that by increasing the charging amount of $H_3PW_{12}O_{40}$•$nH_2O$, the diffraction peak derived from $H_3PW_{12}O_{40}$•$nH_2O$ became larger, and the content of tungsten became abundant with a charging amount which was a relatively small amount.

3.1.2.3.2 NO Conversion Rate

(Measurement Results)

Table 11 shows the NO conversion rates for both the case of moisture not coexisting and the case of coexistence of moisture of each vanadium pentoxide catalyst.
FIG. 12 is a plot graphing this Table 11.

[Table 11]

(Table 11) NOx conversion rate of vanadium pentoxide catalyst

| Sample | | NO conversion rate/% | |
|---|---|---|---|
| | | dry | wet (2.3%) |
| Comparative Example1 | (None) | 76 | 32 |
| Example22 | (38wt%) | 83 | 50 |
| Comparative Example3 | (62wt%) | 52 | 21 |
| Comparative Example4 | (77wt%) | 69 | 28 |
| Comparative Example6 | (100wt%) | 3 | 0 |

As found from Table 11 and FIG. 12, for the case of establishing $H_3PW_{12}O_{40}$•$nH_2O$ as the precursor, although the catalytic activity reached a maximum (82.9%) with the content of tungsten of 38.4 wt%, the vanadium catalyst establishing $K_2WO_4$ as the precursor and having a content of tungsten of 22.1 wt% had results of higher catalytic activity.

3.2 Case using Metatungstic Acid as Precursor

As mentioned above, during production of the vanadium catalysts of Example 2 and Examples 19 to 22, paratungstic acid was used as precursor.
However, paratungstic acid has a characteristic of the solubility in water not being very high.
For this reason, the possibility of tungsten being mixed nonuniformly in the catalyst was suggested.
The metatungstic acid has a high solubility in water compared to paratungstic acid.
Therefore, vanadium catalyst containing tungsten as the second metal was produced by establishing metatungstic acid as the precursor in place of paratungstic acid.

3.2.1 Each Example and Comparative Example

[Example 23]

To a mixture of ammonium vanadate ($NH_4VO_3$), 0.037 mmol of metatungstic acid and 20 ml of pure water, 11.9 g (131.7 mmol) of oxalic acid ($(COOH)_2$) was added, and after stirring at room temperature for 10 minutes, it was stirred for 12 hours at 70°C.
By firing this precursor complex for 4 hours at 300°C, a denitration catalyst of vanadium pentoxide ($V_2O_5$) containing tungsten (W) was obtained.
It should be noted that, for W in the produced denitration catalyst, the amount of ammonium vanadate as a raw material was adjusted so that the total weight ratio of $WO_3$ by metal oxide ($WO_3$) conversion became 2.5 wt% (1.0 mol%).

[Example 24]

To a mixture of ammonium vanadate ($NH_4VO_3$), 0.073 mmol of metatungstic acid and 20 ml of pure water, 11.9 g (131.7 mmol) of oxalic acid ($(COOH)_2$) was added, and after stirring at room temperature for 10 minutes, it was stirred for 12 hours at 70°C.
By firing this precursor complex for 4 hours at 300°C, a denitration catalyst of vanadium pentoxide ($V_2O_5$) containing tungsten (W) was obtained.
It should be noted that, for W in the produced denitration catalyst, the amount of ammonium vanadate as a raw material was adjusted so that the total weight ratio of $WO_3$ by metal oxide ($WO_3$) conversion became 4.9 wt% (2.0 mol%).

[Example 25]

To a mixture of ammonium vanadate ($NH_4VO_3$), 0.128 mmol of metatungstic acid and 20 ml of pure water, 11.9 g (131.7 mmol) of oxalic acid ($(COOH)_2$) was added, and after stirring at room temperature for 10 minutes, it was stirred for 12 hours at 70°C.

By firing this precursor complex for 4 hours at 300°C, a denitration catalyst of vanadium pentoxide ($V_2O_5$) containing tungsten (W) was obtained.

It should be noted that, for W in the produced denitration catalyst, the amount of ammonium vanadate as a raw material was adjusted so that the total weight ratio of $WO_3$ by metal oxide ($WO_3$) conversion became 8.5 wt% (3.5 mol%).

[Example 26]

To a mixture of ammonium vanadate ($NH_4VO_3$), 0.183 mmol of metatungstic acid and 20 ml of pure water, 11.9 g (131.7 mmol) of oxalic acid ($(COOH)_2$) was added, and after stirring at room temperature for 10 minutes, it was stirred for 12 hours at 70°C.

By firing this precursor complex for 4 hours at 300°C, a denitration catalyst of vanadium pentoxide ($V_2O_5$) containing tungsten (W) was obtained.

It should be noted that, for W in the produced denitration catalyst, the amount of ammonium vanadate as a raw material was adjusted so that the total weight ratio of $WO_3$ by metal oxide ($WO_3$) conversion became 11.8 wt% (5.0 mol%).

[Example 27]

To a mixture of ammonium vanadate ($NH_4VO_3$), 0.256 mmol of metatungstic acid and 20 ml of pure water, 11.9 g (131.7 mmol) of oxalic acid ($(COOH)_2$) was added, and after stirring at room temperature for 10 minutes, it was stirred for 12 hours at 70°C.

By firing this precursor complex for 4 hours at 300°C, a denitration catalyst of vanadium pentoxide ($V_2O_5$) containing tungsten (W) was obtained.

It should be noted that, for W in the produced denitration catalyst, the amount of ammonium vanadate as a raw material was adjusted so that the total weight ratio of $WO_3$ by metal oxide ($WO_3$) conversion became 16.1 wt% (7.0 mol%).

[Comparative Example 7]

To a mixture of 0.17 mmol of ammonium vanadate ($NH_4VO_3$), 0.028 mmol of metatungstic acid and 20 ml of pure water, 0.045 g (0.51 mmol) of oxalic acid ($(COOH)_2$) and 1.4 g of titanium oxide powder were added, and after stirring at room temperature for 10 minutes, it was stirred for 12 hours at 70°C.

By firing this precursor complex for 4 hours at 300°C, a denitration catalyst of vanadium pentoxide ($V_2O_5$) containing tungsten (W) loaded on titanium oxide was obtained.

### 3.2.2 Evaluation

#### 3.2.2.1 NO Conversion Rate

(Measurement Method)

For the tungsten-containing vanadium pentoxide catalysts of Example 25 and Example 2, the $NH_3$-SCR reaction was conducted using a fixed bed flow-type reactor at a reaction temperature of 150°C under the conditions of Table 12 below, under a dry atmosphere in the first stage, under a 10% moisture atmosphere in the second stage, and finally under a dry atmosphere again in the third stage.

In the gas passing through the catalyst layer, NO was analyzed by a Jasco FT-IR-4700.

[Table 12]

(Table 12) $NH_3$-SCR measurement conditions

| | |
|---|---|
| Reaction tempe | 150°C |
| Catalyst amoun | 0.375g |
| Gas flow rate | 250mlmin$^{-1}$ |
| | NO: 250ppm, $NH_3$: 250ppm, $O_2$: 4vol% in Ar, 10% $H_2O$ (steam atmosphere) |
| Space velocity | 40,000 mLh$^{-1}$g$_{cat}^{-1}$ |

In addition, the NO conversion rate was calculated by Formula (1) above.

(Measurement Results)

FIG. 13 show the NO conversion rates of the first stage to third stage of each vanadium pentoxide catalyst.

In all stages among the first stage to third stage, the NO conversion rate of vanadium catalyst of Example 25 was higher than the NO conversion rate of vanadium catalyst of Example 2.

In addition, it was shown that, for both the vanadium catalyst of Example 25 and vanadium catalyst of Example 2, under the dry atmosphere after the third stage after subjecting to the 10% moisture atmosphere of the second stage, they returned to a NO conversion rate almost equal to the NO conversion rate under the dry atmosphere of the first stage.

3.2.2.2 Specific Surface Area

(Measurement Method)

For the tungsten-containing vanadium pentoxide catalysts of Example 25 and Example 2, and the vanadium pentoxide catalyst of Comparative Example 1, the specific surface area under a dry atmosphere in the first stage, and under the 10% moisture atmosphere in the second stage, was measured using a fixed bed flow-type reactor at a reaction temperature of 150°C, under the conditions of the above Table 12, similarly to the measurement method of NO conversion rate in 3.2.2.1.

(Measurement Results)

FIG. 14 shows the variation in specific surface area before and after use of each vanadium pentoxide catalyst.

As is evident when comparing Example 25 and Example 2 with Comparative Example 1, the decline in specific surface area before and after use was suppressed by adding tungsten.

In addition, it was shown that the vanadium pentoxide catalyst of Example 25 made using metatungstic acid as a precursor has slightly greater specific surface area than the vanadium pentoxide catalyst of Example 2 made using paratungstic acid as a precursor.

3.2.2.3 Water Concentration Dependency of Catalytic Activity

(Measurement Method)

For the tungsten-containing vanadium pentoxide catalysts of Example 25 and Example 2, and the vanadium pentoxide catalyst of Comparative Example 1, similarly to the measurement method of the NO conversion rate in 3.2.2.1, the specific surface area was measured using a fixed bed flow-type reactor at a reaction temperature of 150°C, under the conditions of the above Table 10, under a dry atmosphere in the first stage, under a 20% moisture atmosphere in the second stage, under a 15% moisture atmosphere in the third stage, under a 10% moisture atmosphere in the fourth stage, under a 5% moisture atmosphere in the fifth stage, and under a dry atmosphere again in the sixth stage.

(Measurement Method)

FIG. 15 shows the transition in NO conversion rates in the first to sixth stages of each vanadium pentoxide catalyst.

The tungsten-containing vanadium pentoxide catalyst differs from the vanadium pentoxide catalyst not containing tungsten, and recovered to the original NO conversion rate, even after conducting $NH_3$-SCR reaction under the 20% moisture atmosphere.

In addition, the vanadium pentoxide catalyst of Example 25 made using metatungstic acid as the precursor shows a higher NO conversion rate, than the vanadium pentoxide catalyst of Example 2 made using paratungstic acid as the precursor.

3.2.2.4 Tungsten Amount Dependency of Catalytic Activity

(Measurement Method)

For the tungsten-containing vanadium pentoxide catalysts of Examples 23 to 27, and vanadium pentoxide catalyst of Comparative Example 1, similarly to the measurement method of NO conversion rate in 3.2.2.1, the NO conversion rate was measured using a fixed bed flow-type reactor at a reaction temperature of 150°C under the conditions of the above Table 12, under a dry atmosphere, and under a 10% moisture atmosphere.

(Measurement Results)

FIG. 16 shows the NO conversion rates under a dry atmosphere and under a 10% moisture atmosphere of each vanadium pentoxide catalyst. Under both a dry atmosphere and a 10% moisture atmosphere, Example 25, i.e. vanadium pentoxide catalyst with 3.5 mol% tungsten addition, showed the highest NO conversion rate, i.e. highest activity.

3.2.2.5 Temperature Dependency of Catalytic Activity

(Measurement Method)

For the tungsten-containing vanadium pentoxide catalyst of Example 25, the vanadium pentoxide catalyst of Comparative Example 1 and the titania-supported tungsten-vanadium catalyst of Comparative Example 7, the $NH_3$-SCR reaction was conducted under a 10% moisture atmosphere, using a fixed bed flow-type reactor at a reaction temperature of 25°C to 245°C under the conditions of Table 13 below. In the gas passing through the catalyst layer, NO was analyzed by a Jasco FT-IR-4700.

[Table 13]

(Table 13) $NH_3$-SCR measurement conditions

| | |
|---|---|
| Reaction tempe | 25°C~245°C |
| Catalyst amoun | 0.375g |
| Gas flow rate | 250mlmin$^{-1}$ |
| | NO: 250ppm, $NH_3$: 250ppm, $O_2$: 4vol% in Ar, 10% $H_2O$ (steam atmosphere) |
| Space velocity | 40,000 mLh$^{-1}$g$_{cat}$$^{-1}$ |

(Measurement Results)

FIG. 17 shows the NO conversion rate at reaction temperatures of 25°C to 245°C of each vanadium pentoxide catalyst.

From FIG. 17, the tungsten-containing vanadium pentoxide catalyst showed high NO conversion rate, high activity, even in a low temperature region, compared to the catalyst loaded on titania.

3.2.2.6 TEM Images of Each Catalyst

FIG. 18 shows the TEM image of the tungsten-containing vanadium pentoxide catalyst of Example 25.

It should be noted that the magnification is 4,400,000 times.

In addition, FIG. 19 is an enlarged image of the rectangular part shown in FIG. 18.

Each white dot shown in the image of FIG. 18 is an atom of vanadium or tungsten, and above all, the bright points among the white points are atoms of tungsten, as elucidated in FIG. 19.

As is found from FIGS. 18 and 19, tungsten disperses in the form of atoms, in the tungsten-containing vanadium pentoxide catalyst of Example 25.

In addition, in some way or other, tungsten more strongly supports the skeleton of the vanadium pentoxide, and becomes a form in which tungsten substitutes positions of vanadium in the crystallites.

FIG. 20 shows a TEM image of the tungsten-containing vanadium pentoxide catalyst of Example 27.

It should be noted that the magnification is 4,400,000 times.

In FIG. 20, the number of bright points among the white points increases, compared to the tungsten-containing vanadium pentoxide catalyst of Example 25 shown in FIG. 18.

This is because the tungsten sites of cluster form increased by the loading amount of tungsten increasing.

FIG. 21 shows the TEM image of the vanadium pentoxide catalyst not containing tungsten of Comparative Example 1.

It should be noted that the magnification is 4,400,000 times.

In FIG. 21, bright white points such as those found in FIGS. 18 to 20 are not found.

This is because the vanadium pentoxide catalyst of Comparative Example 1 does not contain tungsten.

4 Vanadium Catalyst Containing Niobium as Second Metal

The catalysts described in this section fall outside the scope of claim 1.

4.1 Each Example

As mentioned above, among the vanadium catalysts of Examples 1 to 11, since Example 4 (adding niobium) showed the third highest NO conversion rate in the case of moisture not coexisting, and showed a relatively high NO conversion rate even in the case of moisture coexisting, vanadium catalysts according to each of the following examples were produced by varying the added amount of niobium.

[Example 28]

A precursor complex was synthesized by dissolving ammonium vanadate ($NH_4VO_3$) and oxalic acid ($(COOH)_2$) in pure water.
To this precursor complex, oxalic acid complex of niobium (Nb), which is the second metal, was added, so that the $NbO_2O_5$ becomes 1.8 wt% by metal oxide conversion.
By firing the obtained vanadium-niobium complex mixture twice for 4 hours at a temperature of 300°C by an electric furnace, a denitration catalyst of vanadium pentoxide ($V_2O_5$) containing niobium (Nb) was obtained.

[Example 29]

A precursor complex was synthesized by dissolving ammonium vanadate ($NH_4VO_3$) and oxalic acid ($(COOH)_2$) in pure water.
To this precursor complex, oxalic acid complex of niobium (Nb), which is the second metal, was added, so that the $NbO_2O_5$ becomes 5.2 wt% by metal oxide conversion.
By firing the obtained vanadium-niobium complex mixture twice for 4 hours at a temperature of 300°C by an electric furnace, a denitration catalyst of vanadium pentoxide ($V_2O_5$) containing niobium (Nb) was obtained.

[Example 30]

A precursor complex was synthesized by dissolving ammonium vanadate ($NH_4VO_3$) and oxalic acid ($(COOH)_2$) in pure water.
To this precursor complex, oxalic acid complex of niobium (Nb), which is the second metal, was added, so that the $NbO_2O_5$ becomes 8.5 wt% by metal oxide conversion.
By firing the obtained vanadium-niobium complex mixture twice for 4 hours at a temperature of 300°C by an electric furnace, a denitration catalyst of vanadium pentoxide ($V_2O_5$) containing niobium (Nb) was obtained.

[Example 31]

A precursor complex was synthesized by dissolving ammonium vanadate ($NH_4VO_3$) and oxalic acid ($(COOH)_2$) in pure water.
To this precursor complex, oxalic acid complex of niobium (Nb), which is the second metal, was added, so that the $NbO_2O_5$ becomes 11.7 wt% by metal oxide conversion.
By firing the obtained vanadium-niobium complex mixture twice for 4 hours at a temperature of 300°C by an electric furnace, a denitration catalyst of vanadium pentoxide ($V_2O_5$) containing niobium (Nb) was obtained.

[Example 32]

A precursor complex was synthesized by dissolving ammonium vanadate ($NH_4VO_3$) and oxalic acid ($(COOH)_2$) in pure water.
To this precursor complex, oxalic acid complex of niobium (Nb), which is the second metal, was added, so that the $NbO_2O_5$ becomes 16.2 wt% by metal oxide conversion.
By firing the obtained vanadium-niobium complex mixture twice for 4 hours at a temperature of 300°C by an electric furnace, a denitration catalyst of vanadium pentoxide ($V_2O_5$) containing niobium (Nb) was obtained.
It should be noted that Table 14 below shows the charging amount of precursor during niobium introduction in Examples 28 to 32.

[Table 14]

| (Table 14) charging amount of precursor during niobium introduction | | | | | | | |
|---|---|---|---|---|---|---|---|
| | $Nb_2O_5$ wt% | Niobium precursor /mmol | Niobium precursor /g | $NH_4VO_3$ /mmol | $NH_4VO_3$ /g | Oxalic acid /mmol | Oxalic /g acid |
| Example28 | 1.8 | 0.54 | 0.16 | 43.6 | 5.10 | 130.8 | 11.77 |
| Example29 | 5.2 | 1.62 | 0.49 | 43.0 | 5.03 | 129.0 | 11.61 |
| Example30 | 8.5 | 2.70 | 0.82 | 42.4 | 4.96 | 127.1 | 11.45 |
| Example31 | 11.7 | 3.78 | 1.14 | 41.8 | 4.89 | 125.3 | 11.28 |
| Example32 | 18.2 | 5.40 | 1.64 | 40.9 | 4.78 | 122.6 | 11.04 |

4.2 Evaluation

4.2.1 NO Conversion Rate

(Measurement Method)

Under the conditions of the above Table 3, the $NH_3$-SCR reaction was conducted using a fixed bed flow-type reactor at a reaction temperature of 150°C.

In the gas passing through the catalyst layer, NO was analyzed by a Jasco FT-IR-4700.

In addition, the NO conversion rate was calculated by Formula (1) above.

(Measurement Results)

Table 15 shows the NO conversion rates for both the case of moisture not coexisting and the case under coexistence of moisture of each vanadium oxide catalyst.

FIG. 22 is a plot graphing this Table 15.

[Table 15]

(Table 15) NOx conversion rate of vanadium pentoxide catalyst

| Sample | | NO conversion rate/% | |
|---|---|---|---|
| | | dry | wet (2.3%) |
| Comparative Example1 | (None) | 76 | 32 |
| Example28 | (2wt%) | 96 | 66 |
| Example29 | (5wt%) | 90 | 73 |
| Example30 | (9wt%) | 97 | 62 |
| Example31 | (12wt%) | 94 | 60 |
| Example32 | (16wt%) | 91 | 52 |

In both the case of moisture not coexisting and the case under coexistence of moisture, the denitration catalyst of the Examples showed higher NO conversion rate than the denitration catalyst of the Comparative Example.

Above all, in the case of moisture not coexisting, Example 30 (9 wt%) showed the highest NO conversion rate, and in the case of moisture coexisting, Example 29 (5 wt%) showed the highest NO conversion rate.

5 Vanadium Catalyst Containing Carbon and Cobalt as Second Metal, and Fired at Low Temperature

The catalysts described in this section fall outside the scope of claim 1.

5.1 Each Example

[Example 33]

A precursor complex was synthesized by dissolving ammonium vanadate ($NH_4VO_3$) and oxalic acid in pure water.

To this precursor complex, ethylene glycol and an oxalic acid complex which is a precursor of cobalt (Co), which is the second metal, were added, so that $Co_3O_4$ becomes 6 wt% by metal oxide conversion.

By firing the obtained catalyst complex for 2 hours at a temperature of 270°C by an electric furnace, a denitration catalyst of vanadium oxide containing carbon and cobalt (Co) was obtained.

It should be noted that Table 16 below shows the charging amount of precursor during cobalt introduction in Example 33.

[Table 16]

(Table 16) Charging amount of precursor

| | $Co_3O_4$ wt% | Co complex | | $NH_4VO_3$ | | Oxalic acid | | Ethylene glycol | |
|---|---|---|---|---|---|---|---|---|---|
| | | mmol | g | mmol | g | mmol | g | mmol | g |
| Example33 | 6 | 2.88 | 1. 40 | 41.0 | 4.80 | 123.07 | 11.08 | 13.8 | 0.86 |

5.2 Evaluation

5.2.1 Carbon Content

(Measurement Method)

Upon measurement of carbon content of each vanadium pentoxide catalyst, the carbon content was quantified by elemental analysis of C (carbon), H (hydrogen) and N (nitrogen).

In more detail, in the reaction tube at high temperature inside of a CE-440F made by Exeter Analytical Inc., each denitration catalyst was completely combusted and decomposed to convert the C, H and N which are the main constituent elements into $CO_2$, $H_2O$ and $N_2$, followed by sequentially quantifying these three components in three thermal conductivity detectors to measure the contents of C, H and N in the constituent elements.

(Measurement Results)

The carbon content contained in the vanadium catalyst of Example 33 was 0.70 wt%.

5.2.2 NO Conversion Rate

(Measurement Method)

Under the conditions of the above Table 3, the $NH_3$-SCR reaction was conducted using a fixed bed flow-type reactor at a reaction temperature of 150°C.

In the gas passing through the catalyst layer, NO was analyzed by a Jasco FT-IR-4700.

In addition, the NO conversion rate was calculated by Formula (1) above.

(Measurement Results)

Table 17 shows the NO conversion rates for both the case of moisture not coexisting and the case of coexistence of moisture of each vanadium pentoxide catalyst of Comparative Example 1, Example 15 and Example 33.

FIG. 23 is a plot graphing this Table 17.

[Table 17]

(Table 17) NOx conversion rate of vanadium pentoxide catalyst

| Sample | | NO conversion rate/% | |
|---|---|---|---|
| | | dry | wet(2.3%) |
| Comparative Example1 | (V300-4) | 76 | 32 |
| Example28 | (6wt% Co_V300-4) | 100 | 77 |
| Example29 | (6wt% Co_EG_V270-2) | 100 | 89 |

In both the case of moisture not coexisting and the case under coexistence of moisture, the denitration catalyst of Example 33 showed the highest NO conversion rate.

## 6 Vanadium Catalyst Containing Tungsten as Second Metal and Copper as Third Metal

### 6.1 Each Example

[Example 34]

A precursor complex was synthesized by dissolving ammonium vanadate ($NH_4VO_3$) and oxalic acid in pure water.
To this precursor complex, ammonium metatungstate, which is a precursor of tungsten (W) that is the second metal, was added, so that $WO_3$ became 8.4 wt% by metal oxide conversion.
Furthermore, a copper oxalic acid complex which is a precursor of copper (Cu that is the third metal was added, so that CuO became 3.0 wt% by metal oxide conversion.
By firing the obtained catalyst precursor twice for 4 hours at a temperature of 300°C by an electric furnace, a denitration catalyst of vanadium oxide containing tungsten (W) and copper (Cu) was obtained.

### 6.2 Temperature Dependency of Catalytic Activity

(Measurement Method)

For the tungsten and copper-containing vanadium pentoxide catalyst of Example 34, the tungsten-containing vanadium catalyst of Example 25, and the vanadium pentoxide catalyst of Comparative Example 1, the $NH_3$-SCR reaction was conducted under a 10% moisture atmosphere, using a fixed bed flow-type reactor at a reaction temperature of 25°C to 245°C under the conditions of the above Table 13.
In the gas passing through the catalyst layer, NO was analyzed by a Jasco FT-IR-4700.

(Measurement Results)

FIG. 24 shows the NO conversion rate at reaction temperatures of 25°C to 245°C of each vanadium pentoxide catalyst.
From FIG. 24, the tungsten and copper-containing vanadium pentoxide catalyst showed a NO conversion rate of 89.2% in the case of no coexistence of moisture, and a NO conversion rate of 79.2% in the case of coexistence of moisture, in the selective catalytic reduction reaction with a reaction temperature no higher than 200°C, using a denitration catalyst having a content of $WO_3$ of 8.4 wt% and content of CuO of 3.0 wt%, when calculating content by oxide conversion of tungsten and copper.

## Claims

1. A denitration catalyst comprising vanadium oxide as a main component, tungsten, copper and carbon, wherein content by vanadium pentoxide conversion of the vanadium oxide is at least 50 wt%, content by oxide conversion of the tungsten is at least 1 wt% and no more than 40 wt%, and the denitration catalyst further comprises an oxide of a composite metal of vanadium and tungsten.

2. The denitration catalyst according to claim 1, wherein carbon content is at least 0.05 wt%.

3. Use of the denitration catalyst according to claim 1 or 2, for denitration at 300°C or lower.

4. A method for manufacturing the denitration catalyst according to claim 1 or 2, the method comprising a step of firing a mixture of vanadate, chelate compound, a compound of tungsten and a compound of copper.

5. The method for manufacturing according to claim 4, wherein the mixture further includes ethylene glycol.

6. The method for manufacturing according to claim 4 or 5, wherein the step of firing is a step of firing at a temperature of 270°C or lower.

## Patentansprüche

1. Denitrierungskatalysator, der Vanadiumoxid als Hauptkomponente, Wolfram, Kupfer und Kohlenstoff enthält, wobei der Gehalt durch Vanadiumpentoxid-Umwandlung des Vanadiumoxids mindestens 50 Gew.-% beträgt, der Gehalt durch Oxidumwandlung des Wolframs mindestens 1 Gew.-% und nicht mehr als 40 Gew.-% beträgt, und der Denitrierungskatalysator darüber hinaus ein Oxid eines Verbundmetalls aus Vanadium und Wolfram aufweist.

2. Denitrierungskatalysator nach Anspruch 1, wobei der Kohlenstoffgehalt mindestens 0,05 Gew.-% beträgt.

3. Verwendung des Denitrierungskatalysators nach Anspruch 1 oder 2 zur Denitrierung bei 300 °C oder darunter.

4. Verfahren zur Herstellung des Denitrierungskatalysators nach Anspruch 1 oder 2, wobei das Verfahren einen Schritt umfasst, ein Gemisch aus Vanadat, einer Chelatverbindung, einer Verbindung aus Wolfram und einer Verbindung aus Kupfer auszuheizen.

5. Verfahren zur Herstellung nach Anspruch 4, wobei das Gemisch darüber hinaus Ethylenglykol enthält.

6. Verfahren zur Herstellung nach Anspruch 4 oder 5, wobei es sich bei dem Schritt des Ausheizens um einen Schritt des Ausheizens bei einer Temperatur von 270 °C oder niedriger handelt.

## Revendications

1. Catalyseur de dénitration contenant de l’oxyde de vanadium comme composant principal, du tungstène, du cuivre et du carbone, la teneur par conversion du pentoxyde de vanadium en oxyde de vanadium étant d’au moins 50 % en poids, la teneur par conversion de l’oxyde en tungstène étant d’au moins 1 % en poids et d’au plus 40 % en poids, et le catalyseur de dénitration contenant en outre un oxyde d’un métal composé de vanadium et de tungstène.

2. Le catalyseur de dénitration selon la revendication 1, sachant que la teneur en carbone est d’au moins 0,05 % en poids.

3. Utilisation du catalyseur de dénitration selon la revendication 1 ou 2 pour la dénitration à 300 °C ou moins.

4. Procédé de fabrication du catalyseur de dénitration selon la revendication 1 ou 2, sachant que le procédé comprend une étape consistant à calciner un mélange de vanadate, d’un composé chélaté, d’un composé de tungstène et d’un composé de cuivre.

5. Le procédé de fabrication selon la revendication 4, sachant que le mélange contient en outre de l’éthylène glycol.

6. Le procédé de fabrication selon la revendication 4 ou 5, sachant que l’étape de calcination est une étape de calcination à une température de 270 °C ou moins.

FIG. 1

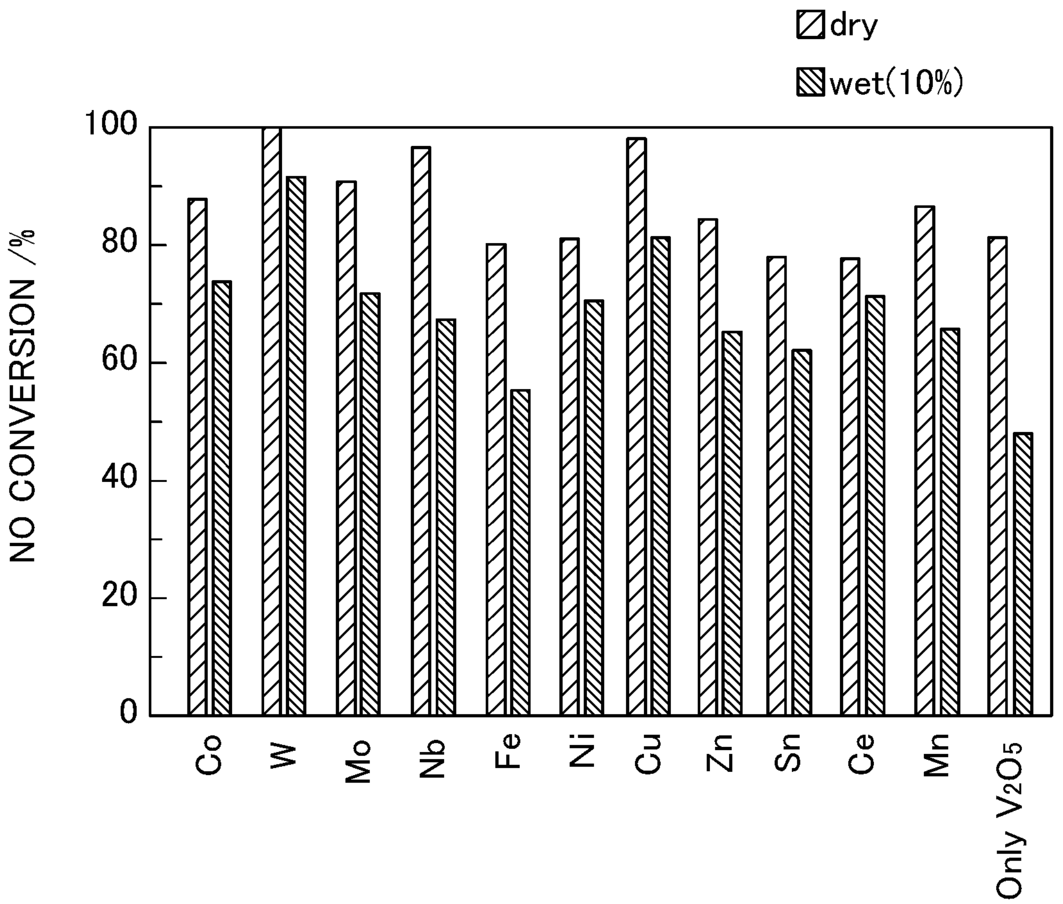
dry
wet(10%)
100
80
60
40
20
0
NO CONVERSION /%
Co
W
Mo
Nb
Fe
Ni
Cu
Zn
Sn
Ce
Mn
Only V2O5

FIG. 2

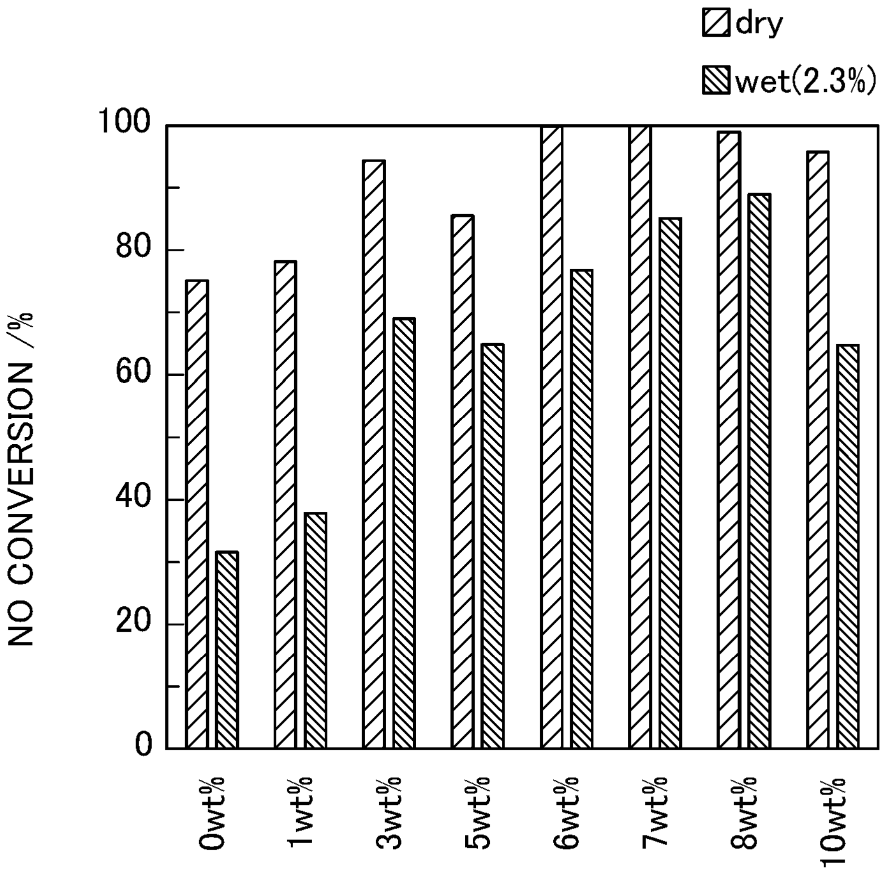
dry
wet(2.3%)
NO CONVERSION /%
100
80
60
40
20
0
0wt%
1wt%
3wt%
5wt%
6wt%
7wt%
8wt%
10wt%

FIG. 3

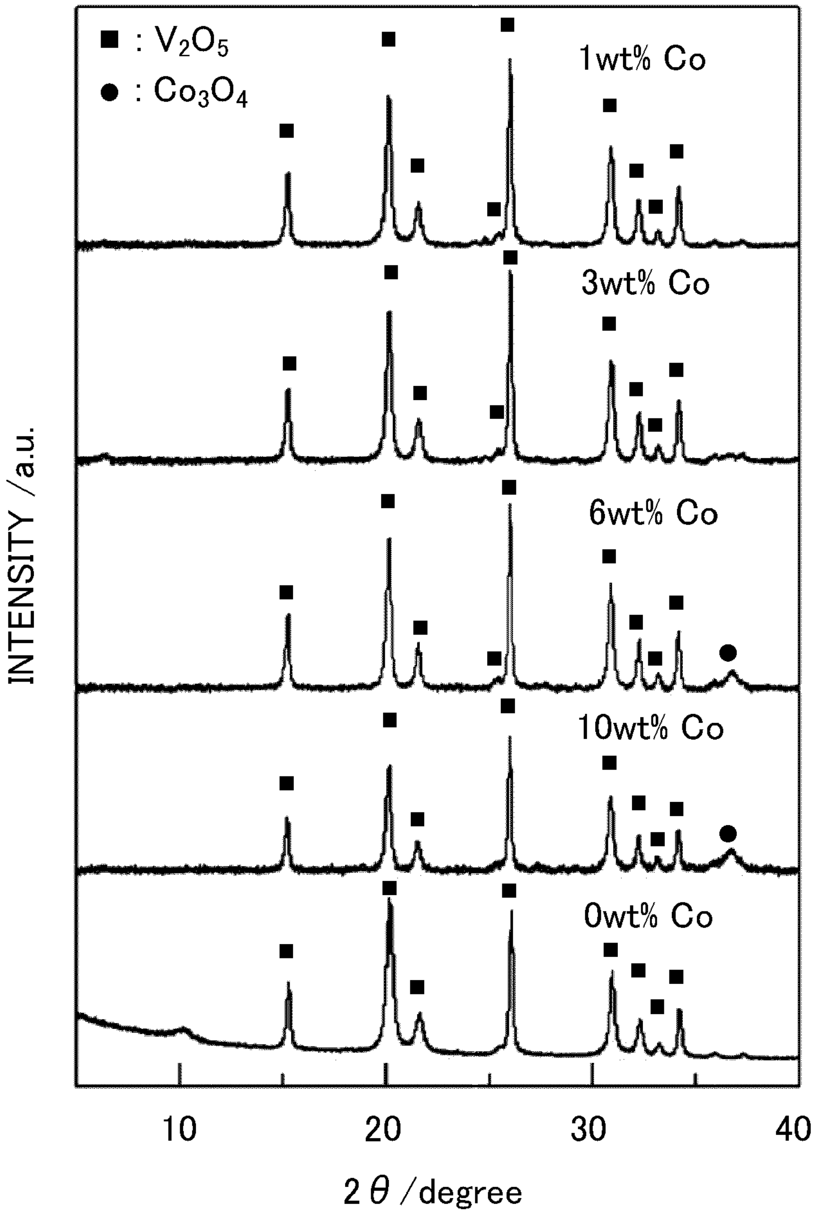
■ : $V_2O_5$
● : $Co_3O_4$
1wt% Co
3wt% Co
6wt% Co
10wt% Co
0wt% Co
INTENSITY /a.u.
10
20
30
40
2θ /degree

FIG. 4

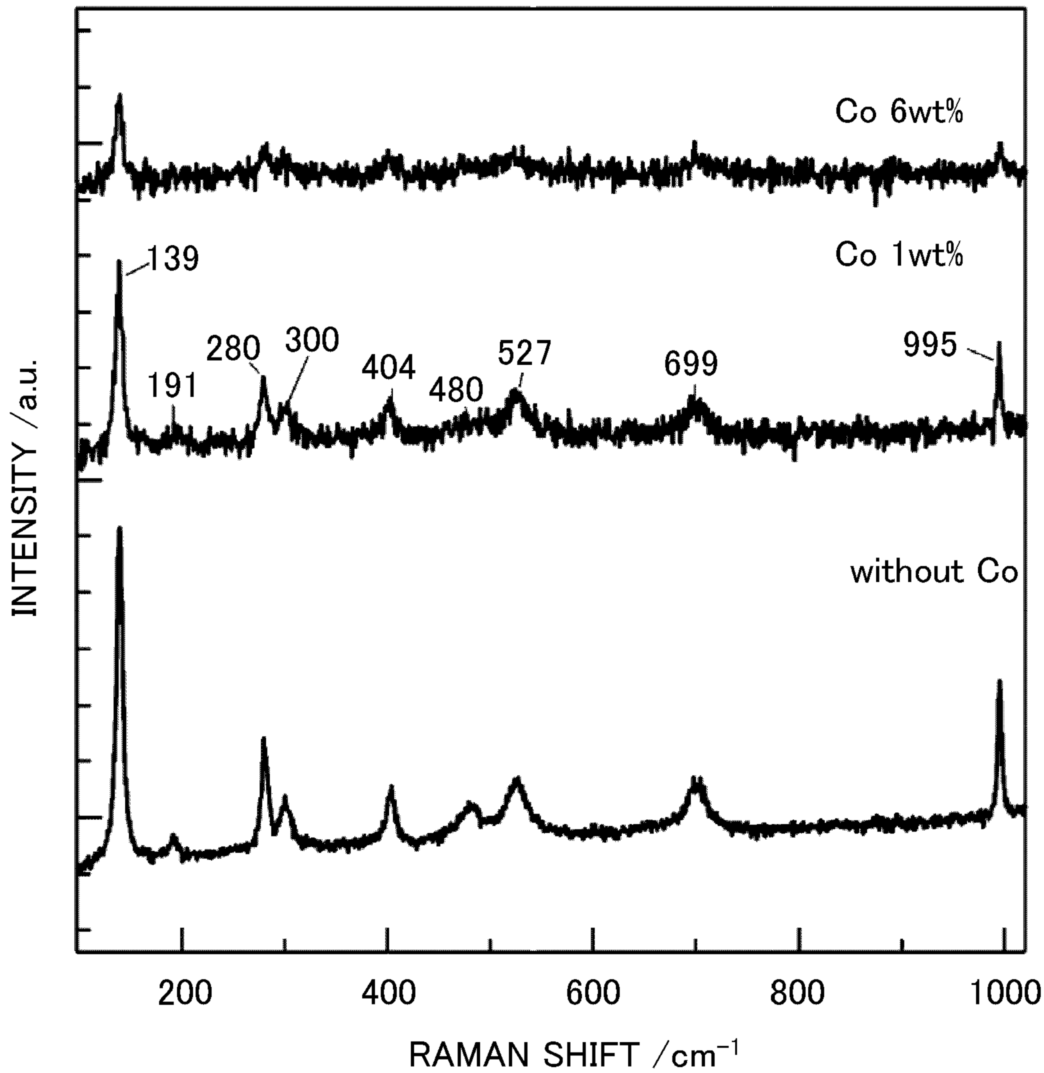
Co 6wt%
Co 1wt%
139
191
280
300
404
480
527
699
995
without Co
INTENSITY /a.u.
200
400
600
800
1000
RAMAN SHIFT /cm⁻¹

# FIG. 5A

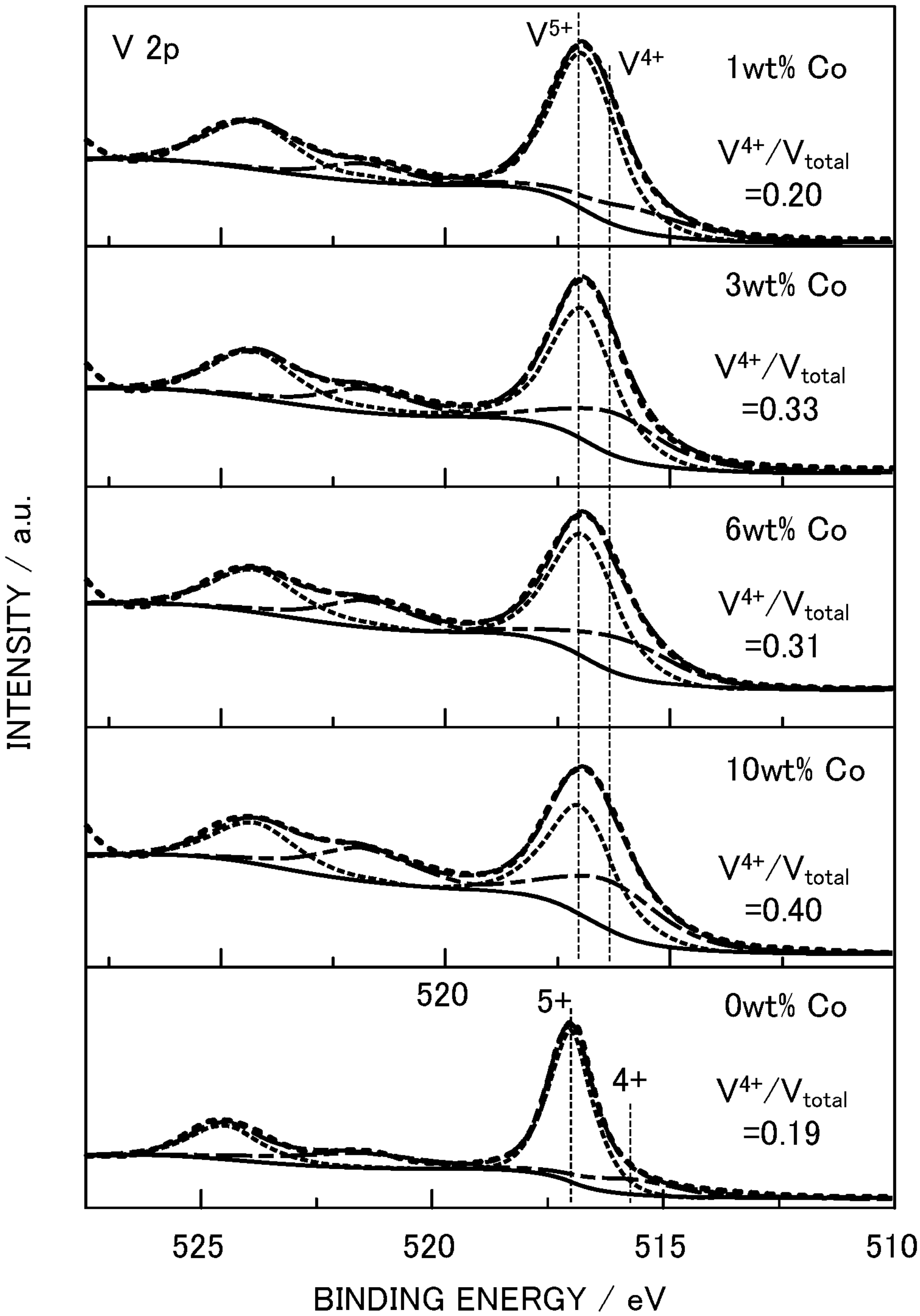
V 2p
$V^{5+}$
$V^{4+}$
1wt% Co
$V^{4+}/V_{total}$ =0.20
3wt% Co
$V^{4+}/V_{total}$ =0.33
6wt% Co
$V^{4+}/V_{total}$ =0.31
10wt% Co
$V^{4+}/V_{total}$ =0.40
520
5+
4+
0wt% Co
$V^{4+}/V_{total}$ =0.19
INTENSITY / a.u.
525
520
515
510
BINDING ENERGY / eV

FIG. 5B

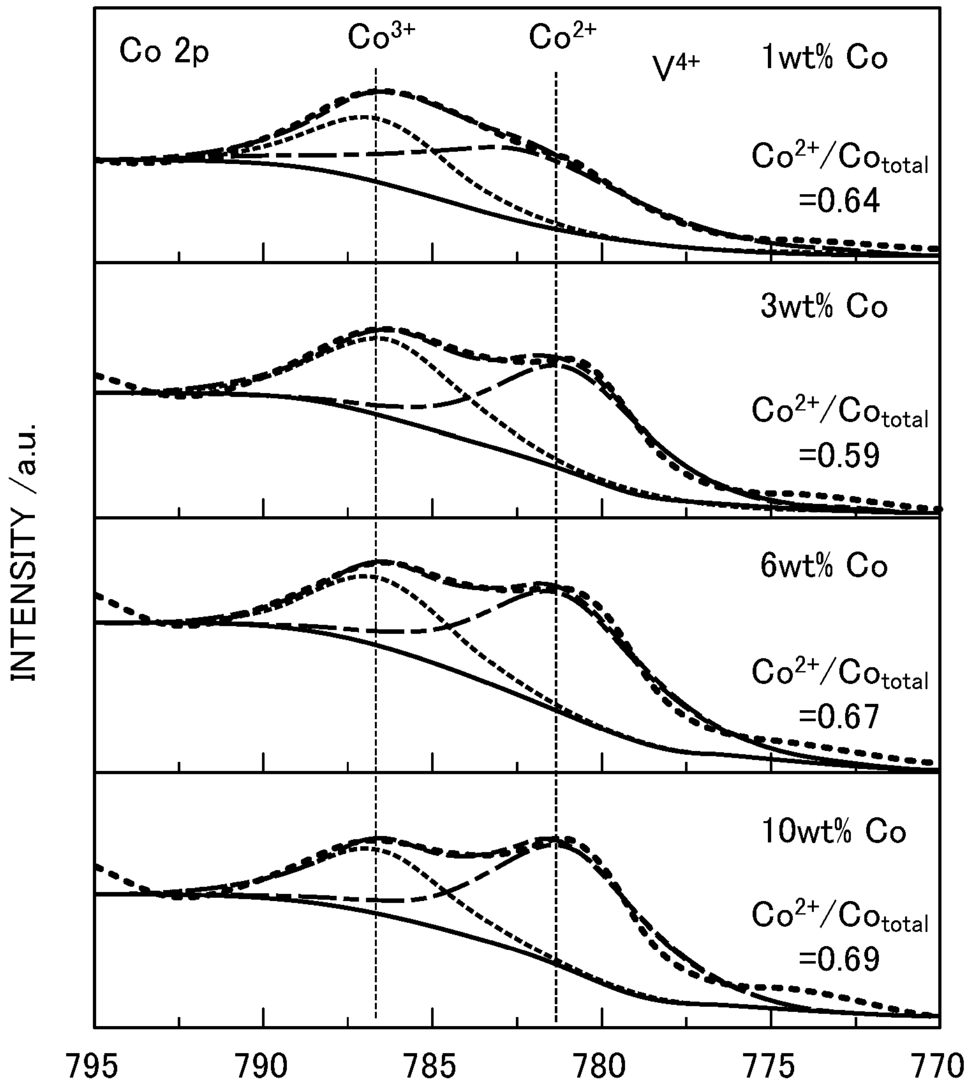
Co 2p
Co3+
Co2+
V4+
1wt% Co
Co2+/Cototal
=0.64
3wt% Co
Co2+/Cototal
=0.59
6wt% Co
Co2+/Cototal
=0.67
10wt% Co
Co2+/Cototal
=0.69
INTENSITY /a.u.
795
790
785
780
775
770

FIG. 6

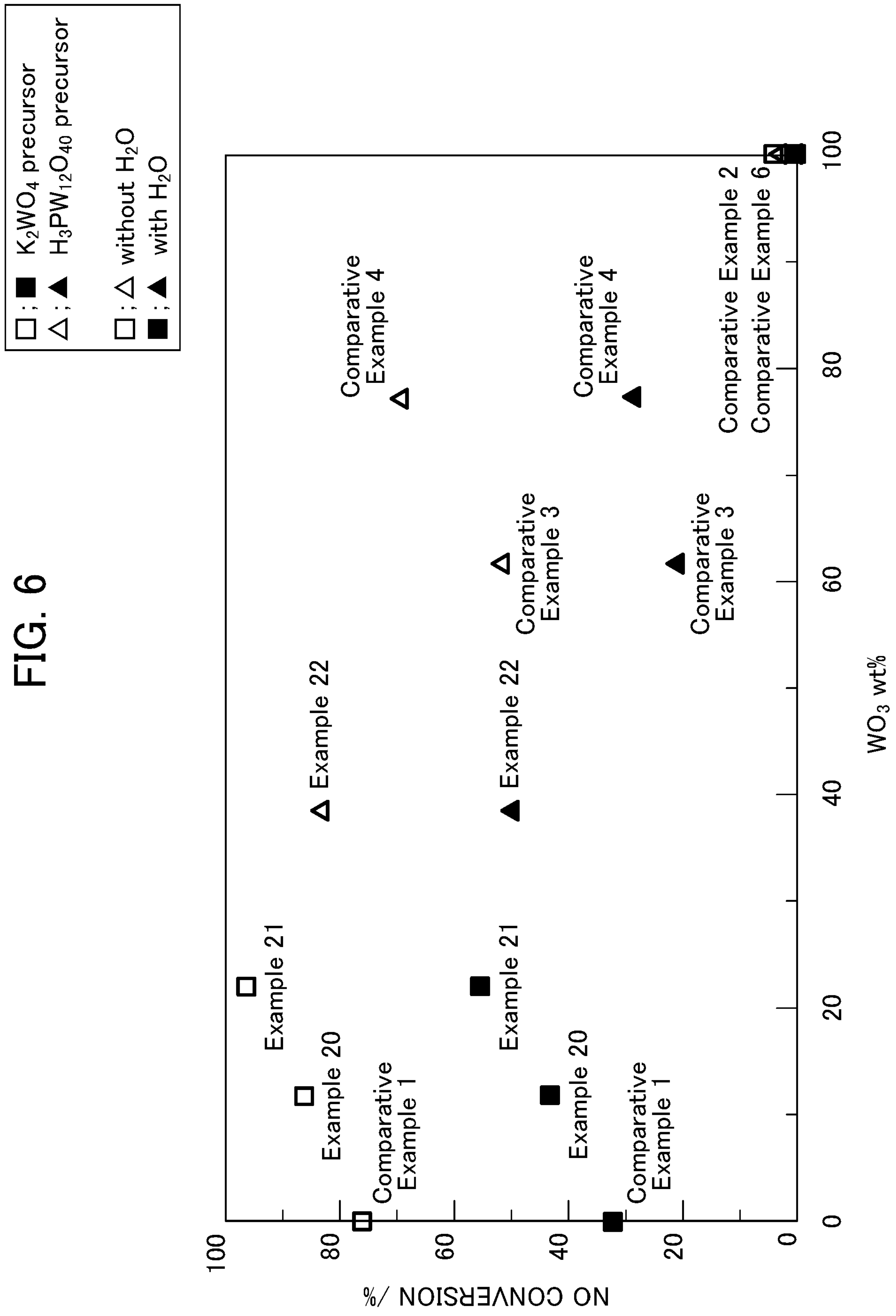
□ ; ■ $K_2WO_4$ precursor
△ ; ▲ $H_3PW_{12}O_{40}$ precursor
□ ; △ without $H_2O$
■ ; ▲ with $H_2O$
NO CONVERSION /%
$WO_3$ wt%
0
20
40
60
80
100
Comparative Example 1
Example 20
Example 21
Example 22
Comparative Example 3
Comparative Example 4
Comparative Example 2
Comparative Example 6

FIG. 7

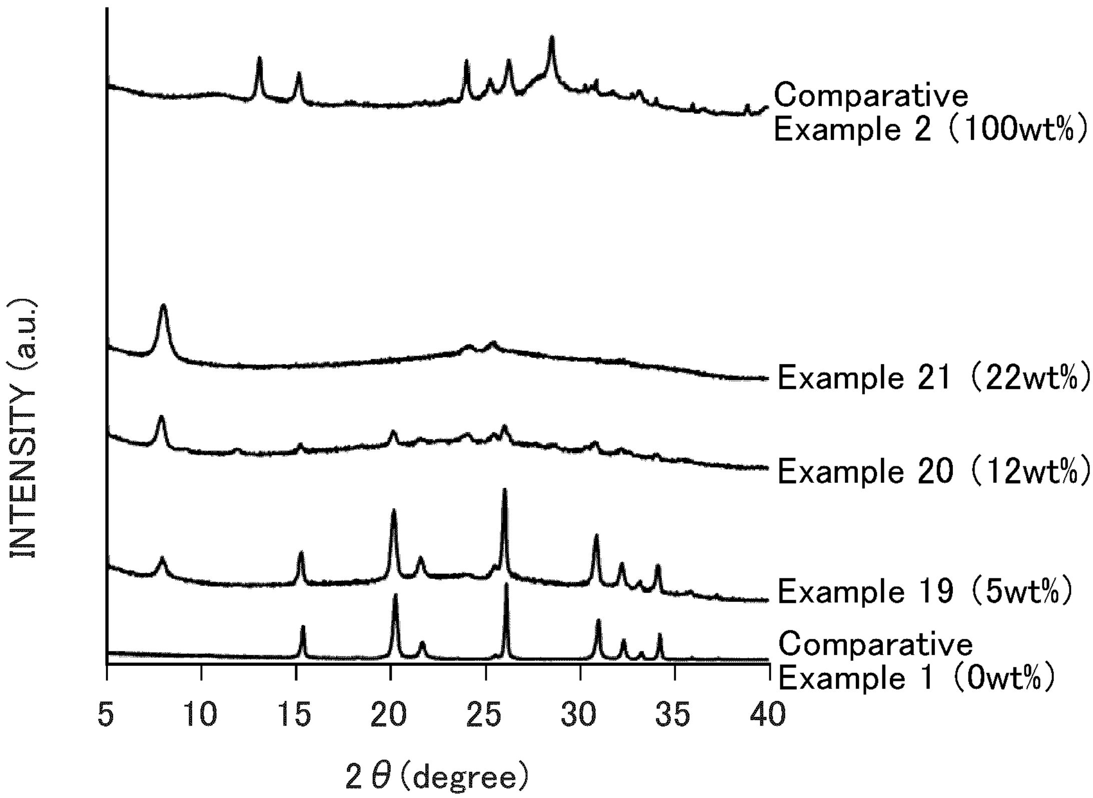
INTENSITY (a.u.)
Comparative Example 2 (100wt%)
Example 21 (22wt%)
Example 20 (12wt%)
Example 19 (5wt%)
Comparative Example 1 (0wt%)
5 10 15 20 25 30 35 40
2θ (degree)

FIG. 8

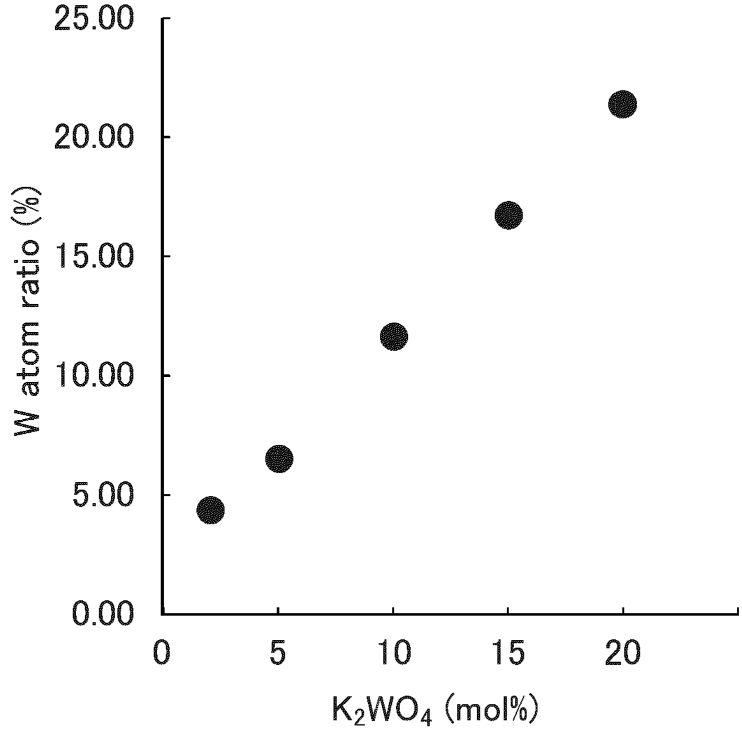

FIG. 9

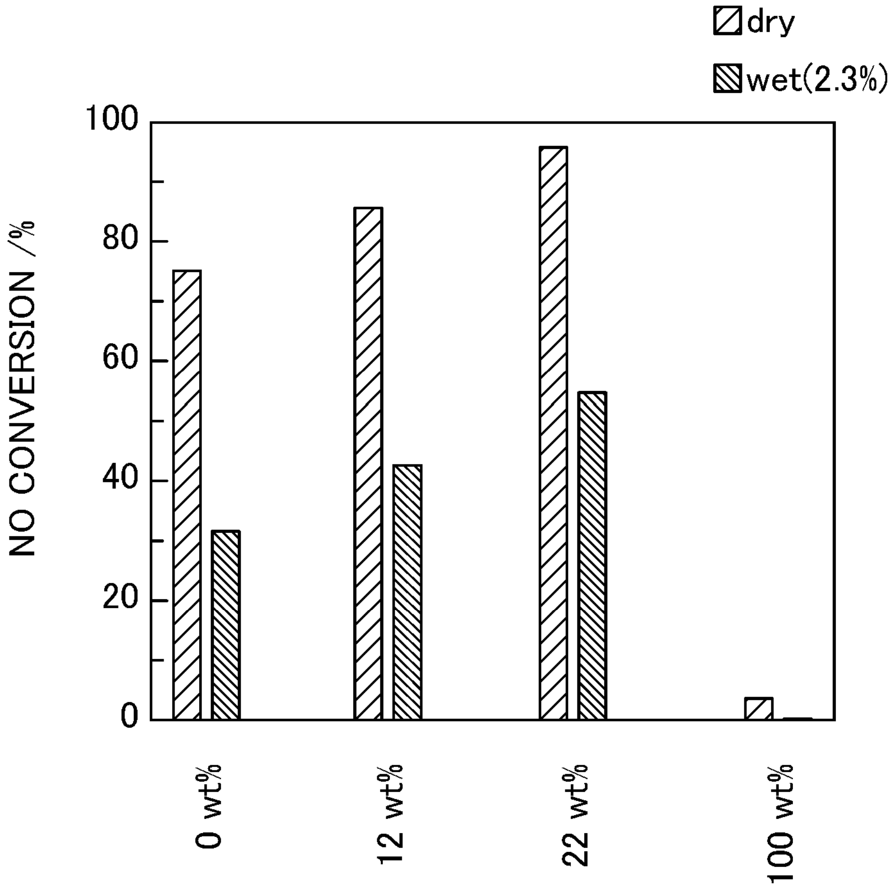

FIG. 10

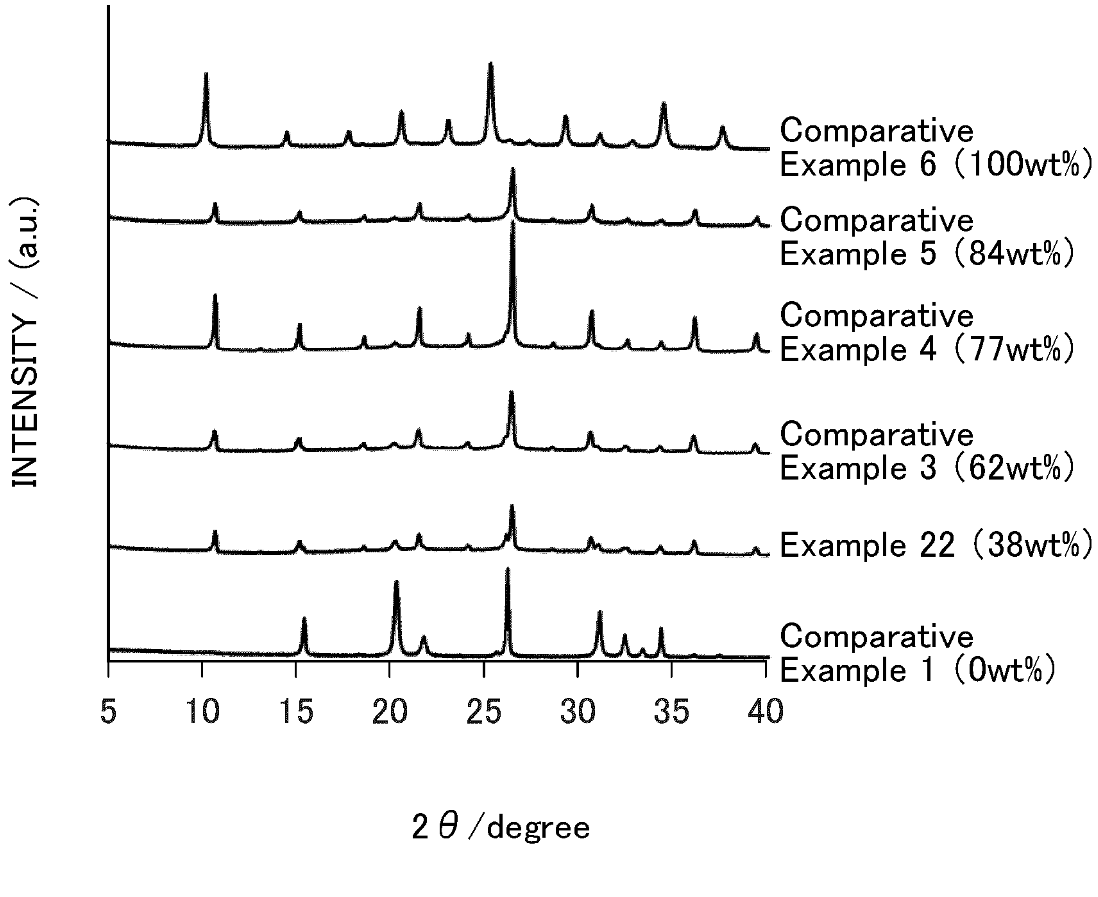
INTENSITY / (a.u.)
Comparative Example 6 (100wt%)
Comparative Example 5 (84wt%)
Comparative Example 4 (77wt%)
Comparative Example 3 (62wt%)
Example 22 (38wt%)
Comparative Example 1 (0wt%)
5
10
15
20
25
30
35
40
2θ/degree

FIG. 11

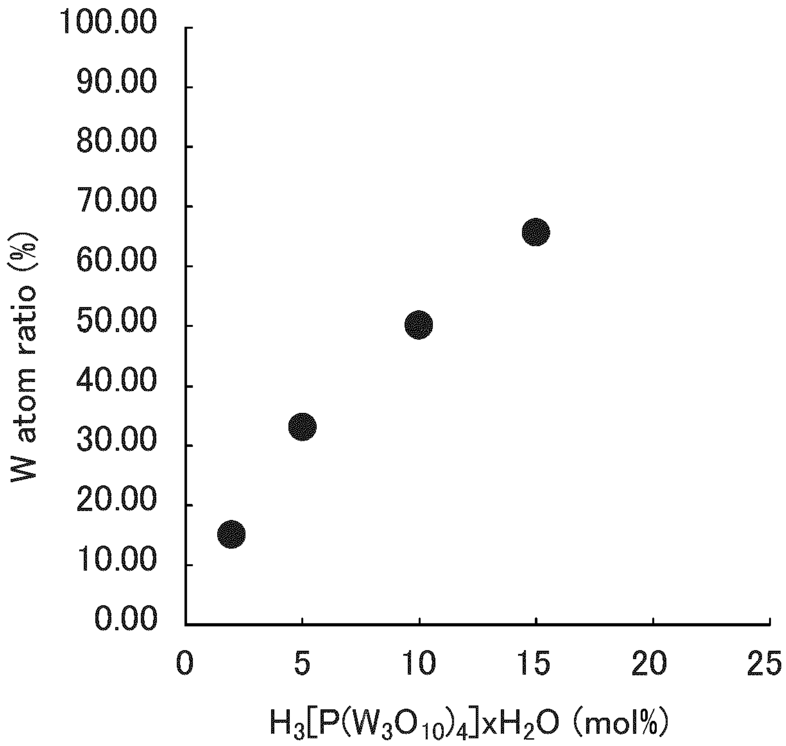
100.00
90.00
80.00
70.00
60.00
50.00
40.00
30.00
20.00
10.00
0.00
W atom ratio (%)
0
5
10
15
20
25
$H_3[P(W_3O_{10})_4]xH_2O$ (mol%)

FIG. 12

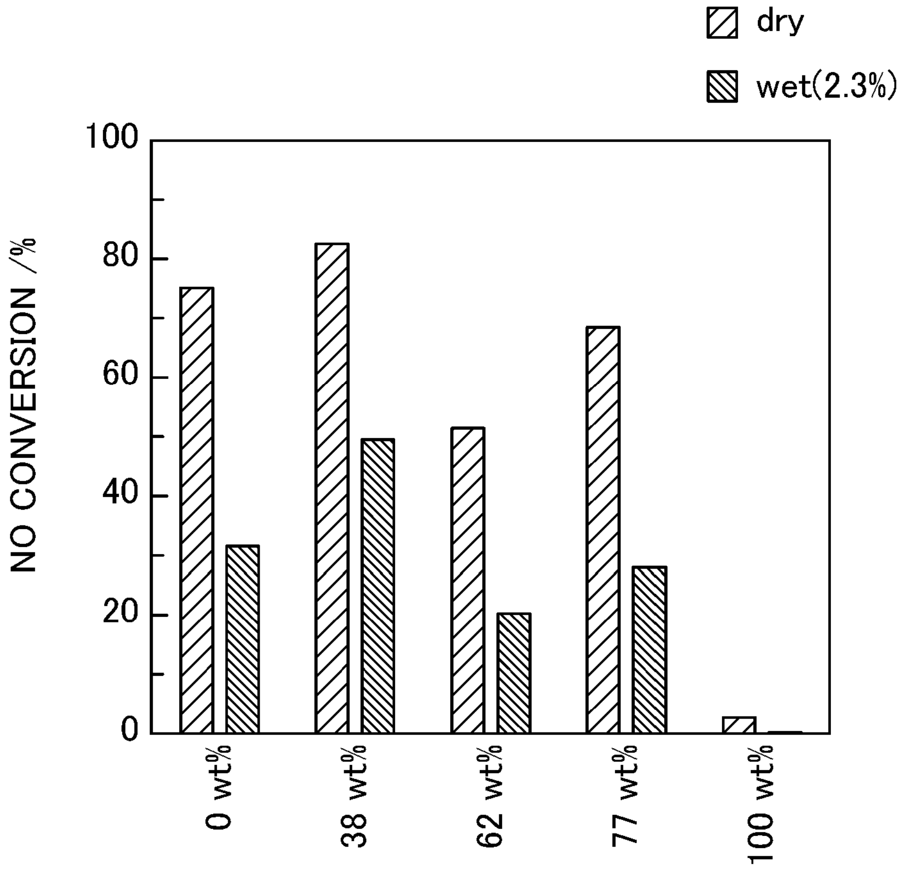
dry
wet(2.3%)
NO CONVERSION /%
100
80
60
40
20
0
0 wt%
38 wt%
62 wt%
77 wt%
100 wt%

FIG. 13

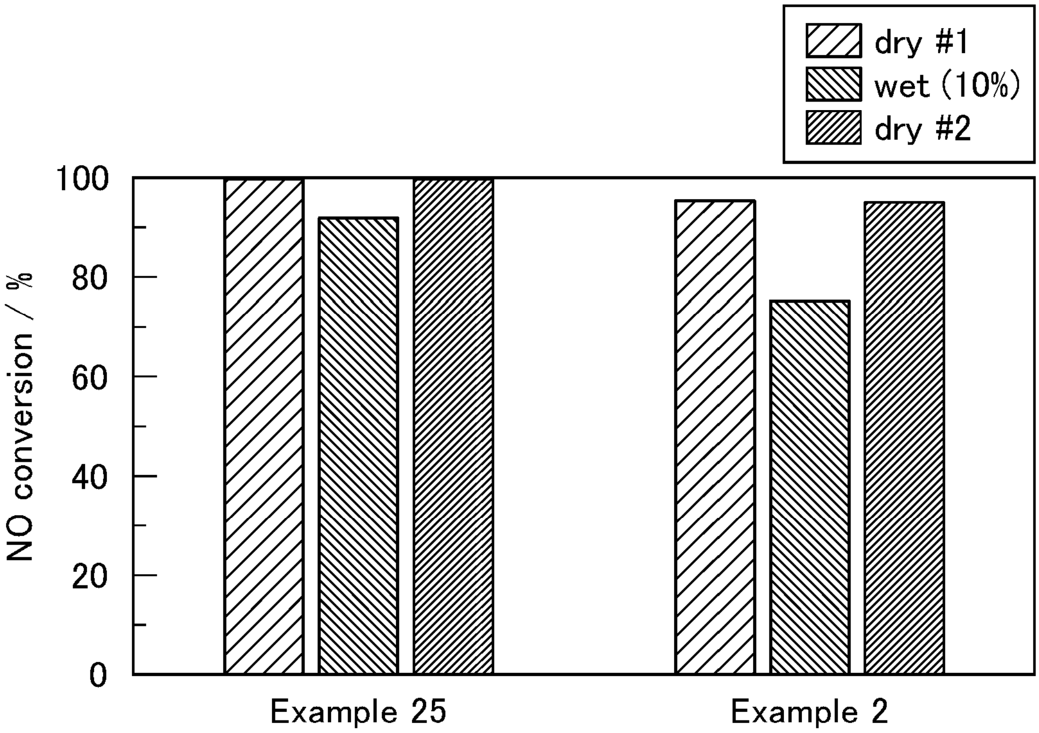
dry #1
wet (10%)
dry #2
NO conversion / %
100
80
60
40
20
0
Example 25
Example 2

FIG. 14

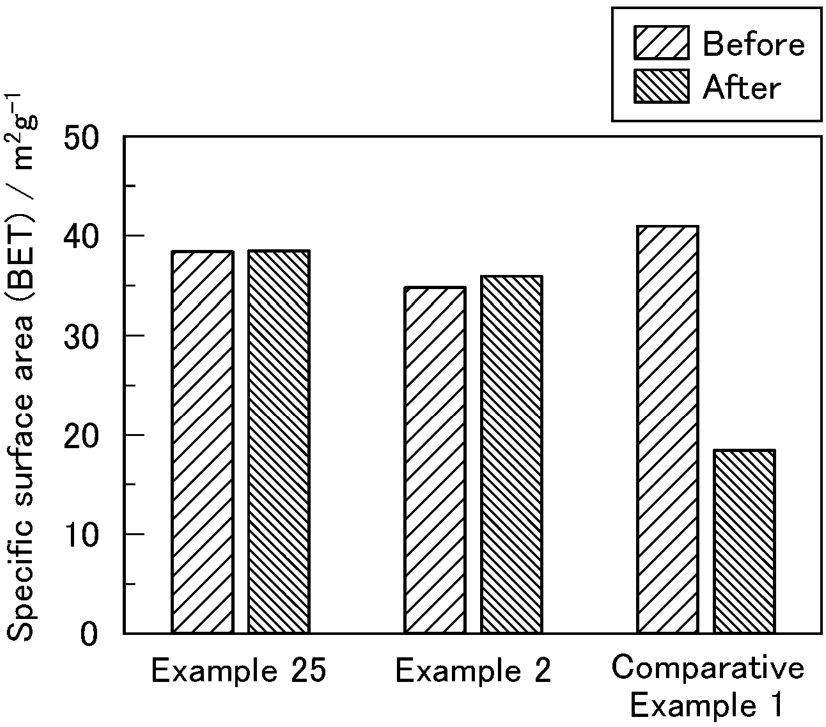
Before
After
Specific surface area (BET) / $m^2g^{-1}$
50
40
30
20
10
0
Example 25
Example 2
Comparative Example 1

FIG. 15

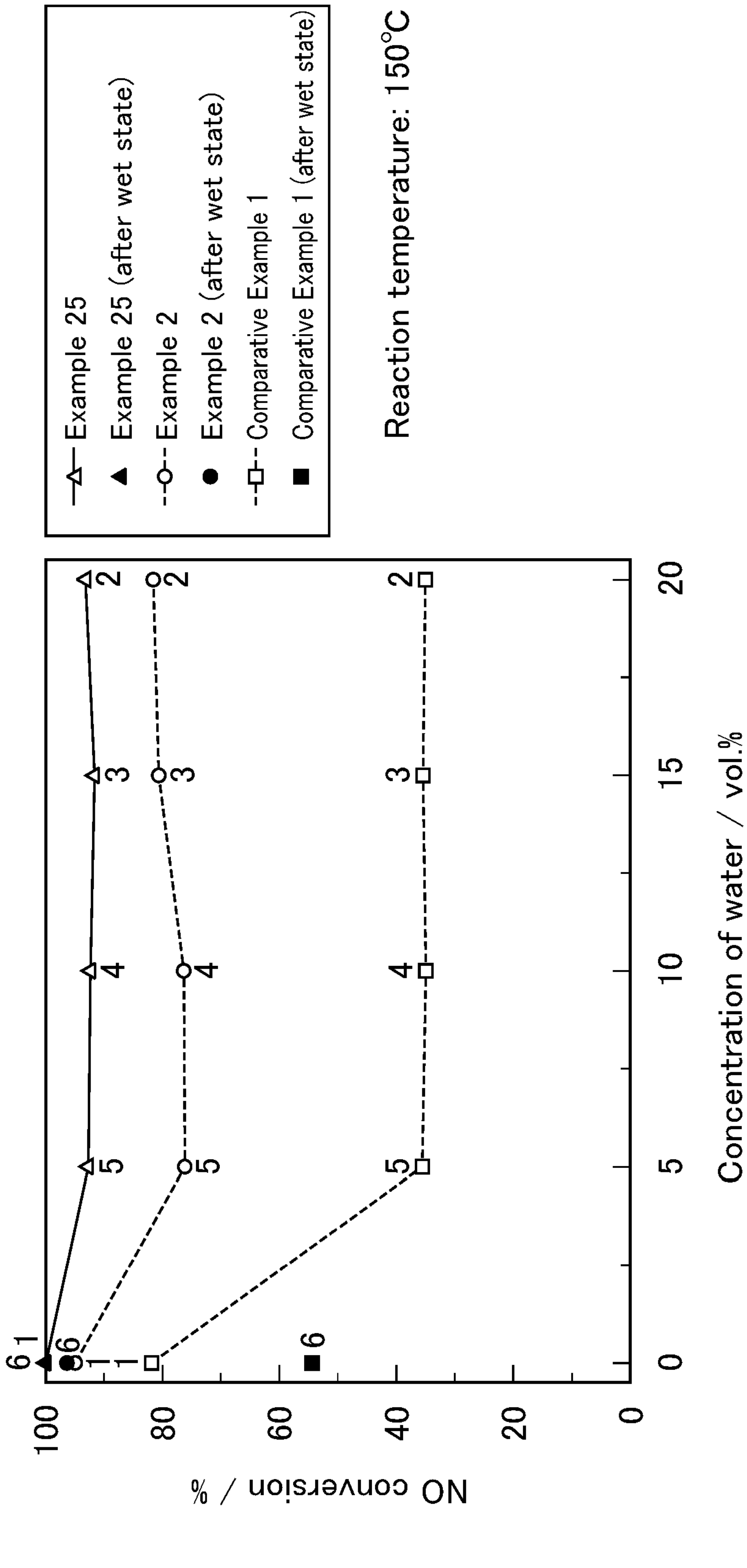
Example 25
Example 25 (after wet state)
Example 2
Example 2 (after wet state)
Comparative Example 1
Comparative Example 1 (after wet state)
Reaction temperature: 150°C
NO conversion / %
Concentration of water / vol.%
0
5
10
15
20
0
20
40
60
80
100
6 1
6
1
1
6
5
4
3
2
5
4
3
2
5
4
3
2

FIG. 16

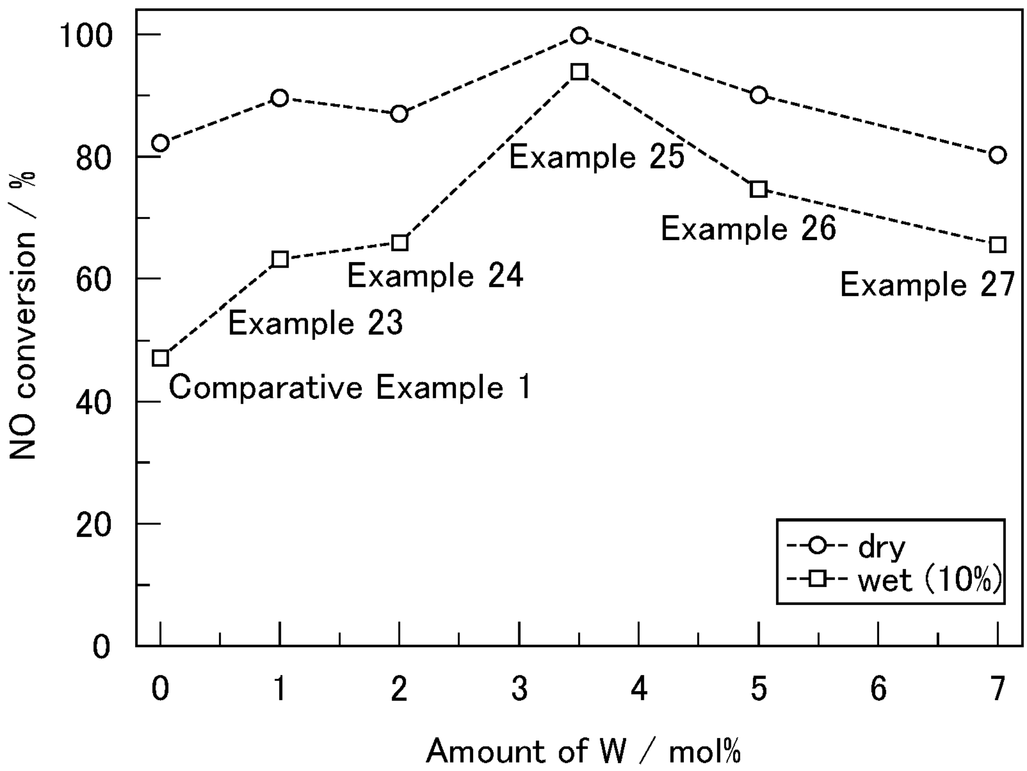

100
80
60
40
20
0
NO conversion / %
0
1
2
3
4
5
6
7
Amount of W / mol%
Example 25
Example 26
Example 27
Example 24
Example 23
Comparative Example 1
dry
wet (10%)

FIG. 17

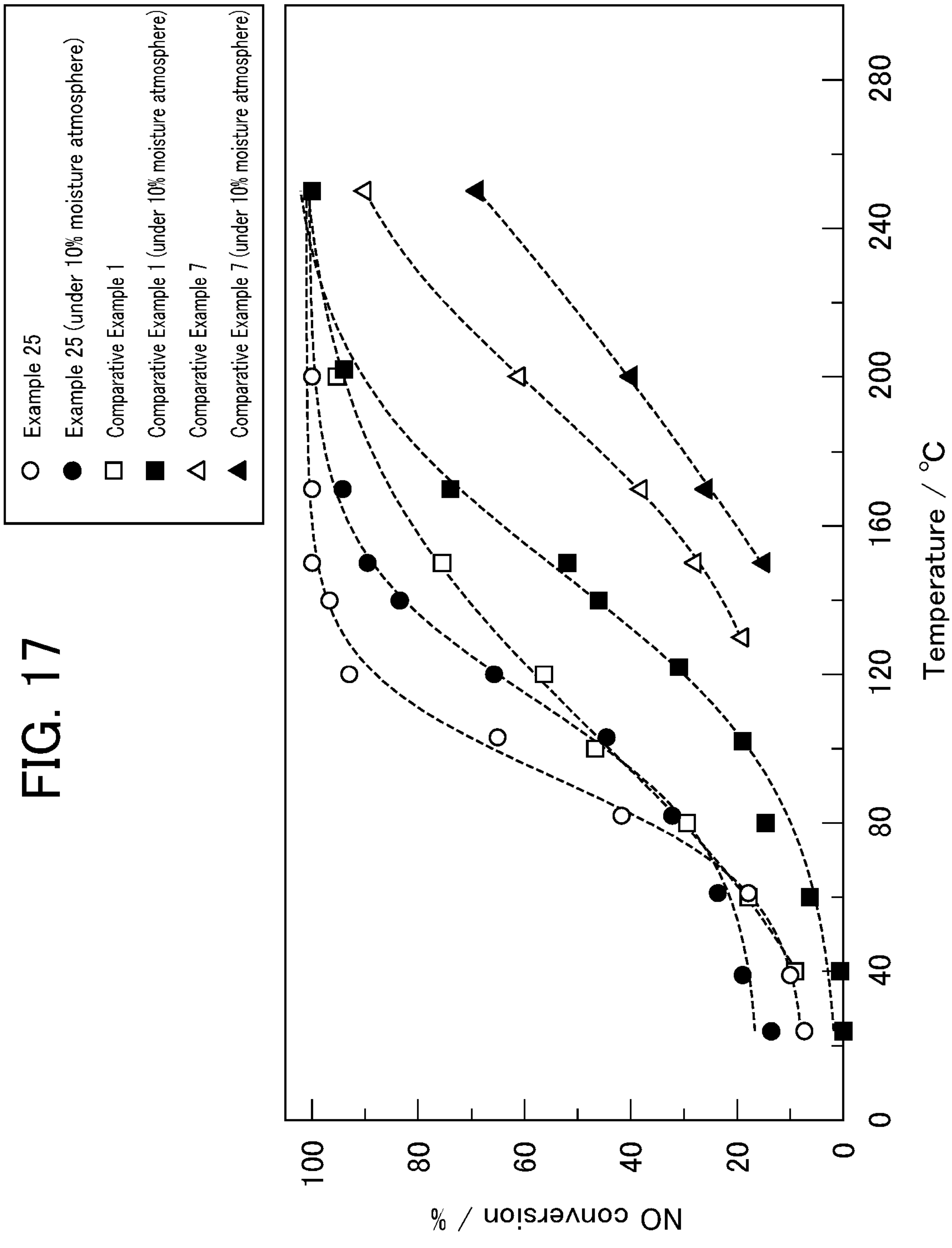
Example 25
Example 25 (under 10% moisture atmosphere)
Comparative Example 1
Comparative Example 1 (under 10% moisture atmosphere)
Comparative Example 7
Comparative Example 7 (under 10% moisture atmosphere)
NO conversion / %
Temperature / °C
0
20
40
60
80
100
0
40
80
120
160
200
240
280

FIG. 18

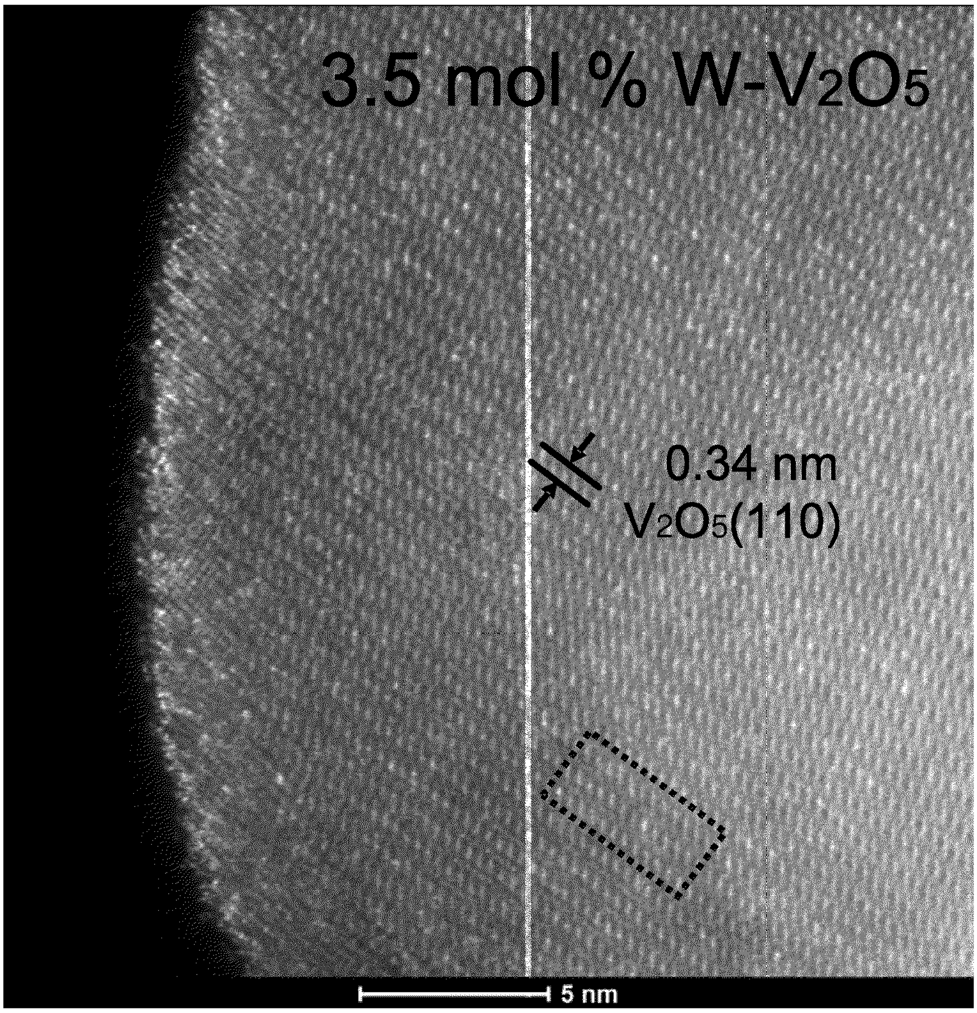

FIG. 19

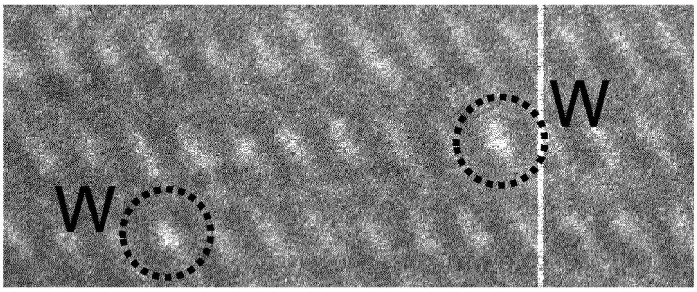

FIG. 20

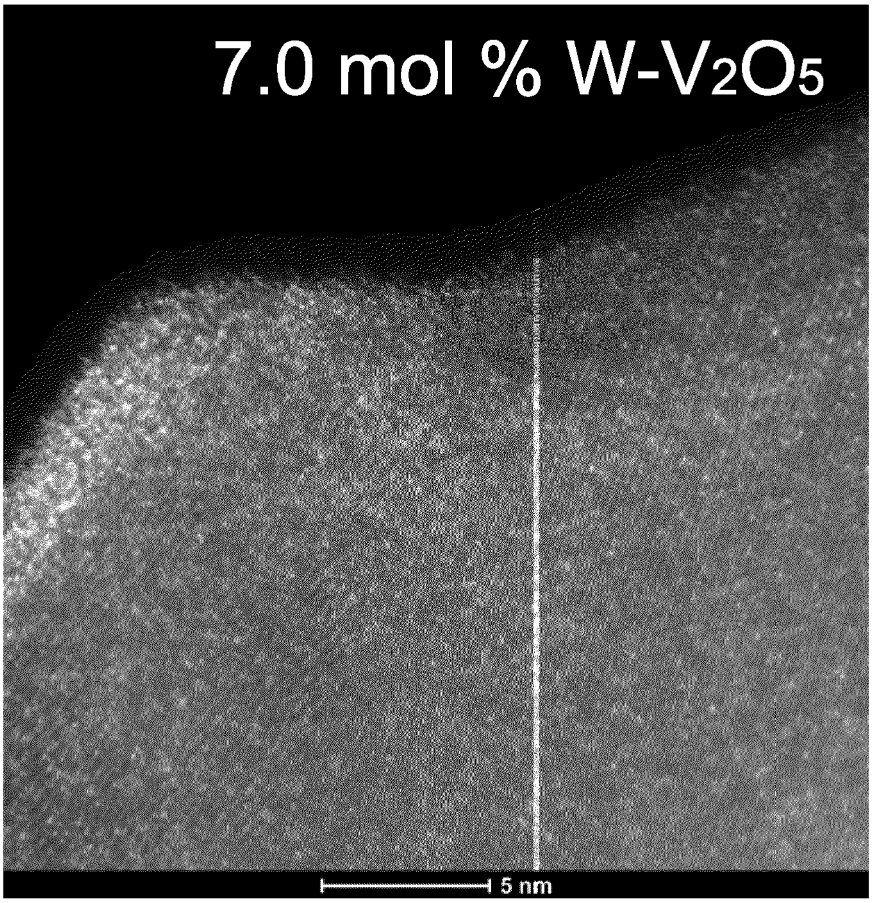

FIG. 21

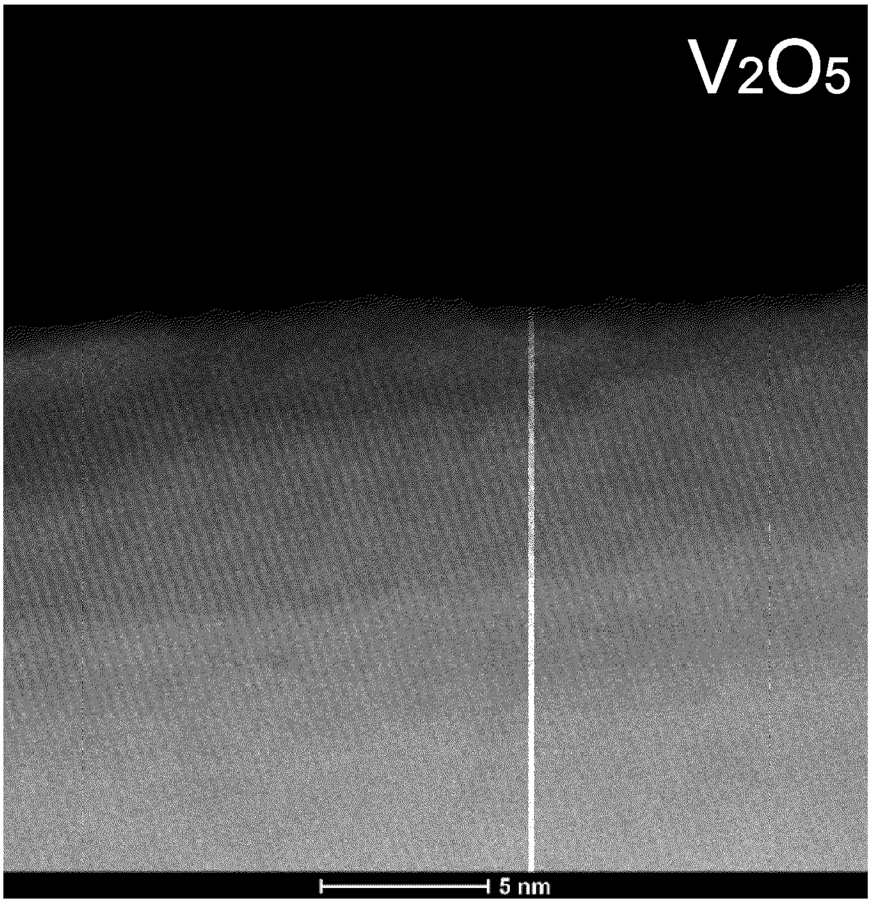

FIG. 22

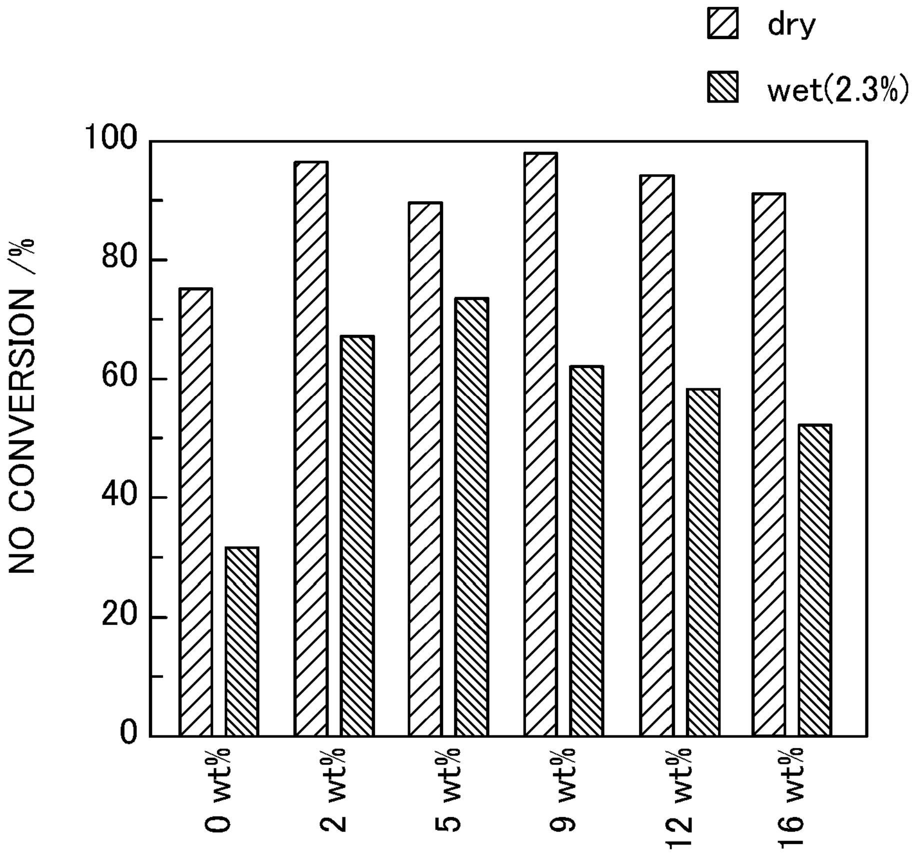
dry
wet(2.3%)
NO CONVERSION /%
100
80
60
40
20
0
0 wt%
2 wt%
5 wt%
9 wt%
12 wt%
16 wt%

FIG. 23

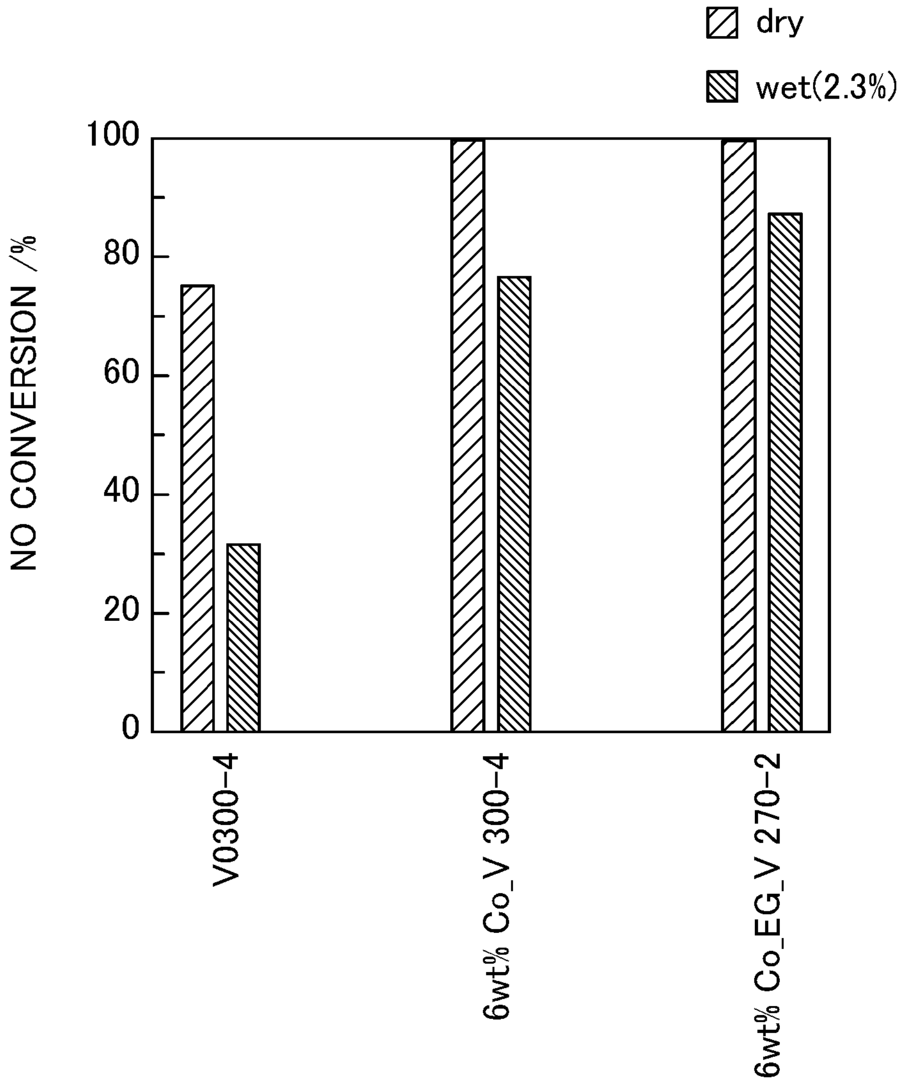
dry
wet(2.3%)
NO CONVERSION /%
0
20
40
60
80
100
V0300-4
6wt% Co_V 300-4
6wt% Co_EG_V 270-2

FIG. 24

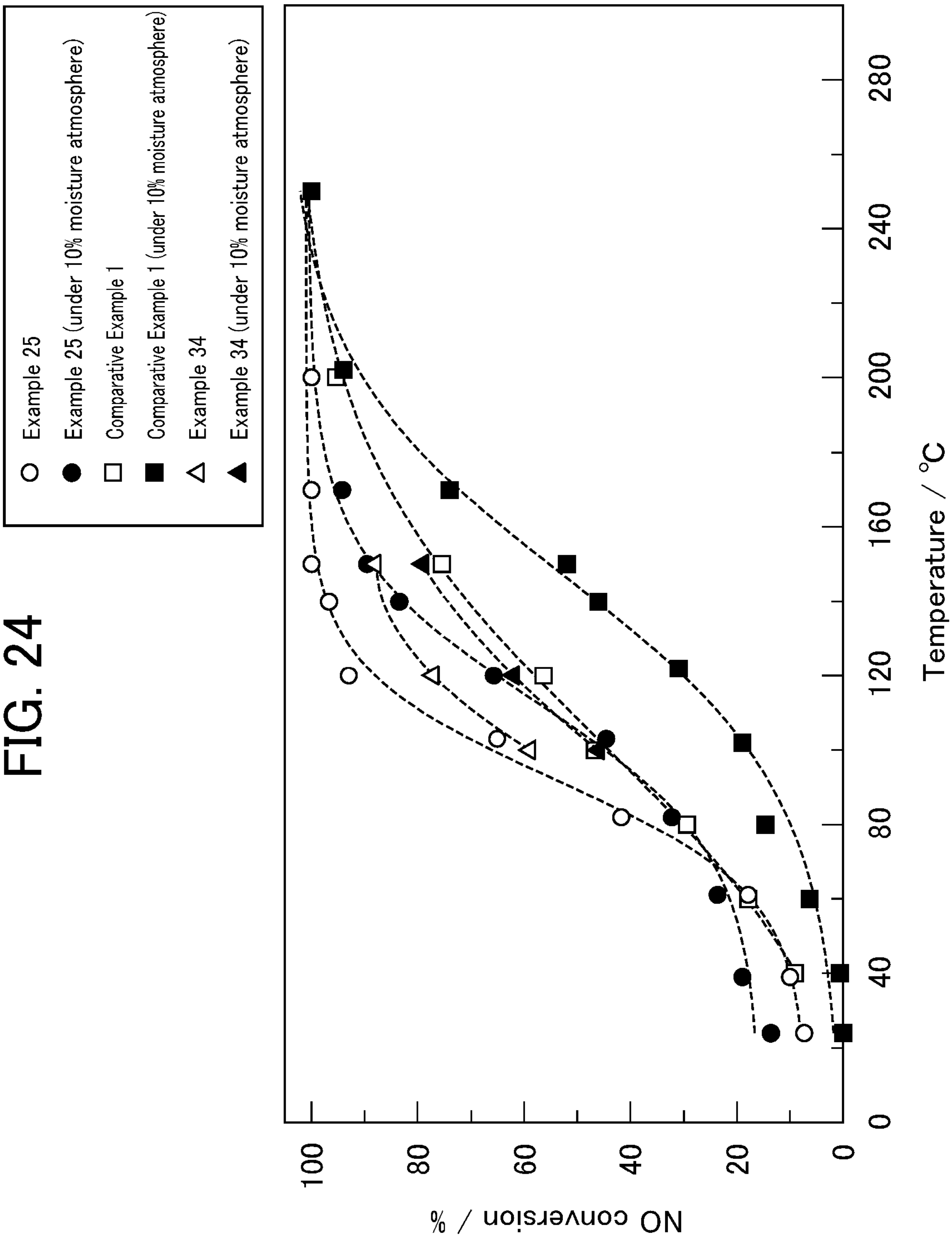
Example 25
Example 25 (under 10% moisture atmosphere)
Comparative Example 1
Comparative Example 1 (under 10% moisture atmosphere)
Example 34
Example 34 (under 10% moisture atmosphere)
NO conversion / %
0
20
40
60
80
100
Temperature / °C
0
40
80
120
160
200
240
280

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2004275852 A
- JP 6093101 B
- CN 103623814 B
- US 20180272318 A1
- JP 9010 A

### Non-patent literature cited in the description

- **NAJBAR M.** low-temperature reactivity of the surface species of vanadia-tungsta catalyst. *Solid State Ionics*, 2001, vol. 141, 499-506
- **SHEN M.** New insight into the promotion effect of Cu doped V2O5/WO3-TiO2 for low temperature NH3-SCR performance. *RSC Advances*, 2015, vol. 5, 35155-35165